# EUROPÄISCHE PATENTSCHRIFT

(11) **EP 3 111 355 B1**
(45) Veröffentlichungstag und Bekanntmachung des Hinweises auf die Patenterteilung: **11.09.2019**
(21) Anmeldenummer: 15706462.7
(22) Anmeldetag: 24.02.2015
(51) Int. Cl.: G06F 21/60, G06F 21/72, G06F 21/12, G06F 21/14

(54) **VERFAHREN ZUM SCHUTZ EINES COMPUTERPROGRAMMS GEGEN BEEINFLUSSUNG UND COMPUTERSYSTEM**
METHOD FOR PROTECTING A COMPUTER PROGRAM FROM BEING INFLUENCED, AND COMPUTER SYSTEM
PROCÉDÉ DE PROTECTION D'UN PROGRAMME D'ORDINATEUR CONTRE TOUTE INTERFÉRENCE ET SYSTÈME INFORMATIQUE

(30) Priorität: 28.02.2014 EP 14157177; 13.08.2014 EP 14180795
(43) Veröffentlichungstag der Anmeldung: 04.01.2017
(73) Patentinhaber: Wibu-Systems AG, 76137 Karlsruhe (DE)
(72) Erfinder: WICHMANN, Peer, 76646 Bruchsal (DE); WINZENRIED, Oliver, 76137 Karlsruhe (DE); KÜGLER, Rüdiger, 76530 Baden-Baden (DE)
(74) Vertreter: Durm Patentanwälte PartG mbB
(86) Internationale Anmeldenummer: PCT/EP2015/053773
(87) Internationale Veröffentlichungsnummer: WO 2015/128301

(56) Entgegenhaltungen:
- US-A1- 2005 183 072
- US-A1- 2010 017 879

## Beschreibung

Die vorliegende Erfindung betrifft ein Verfahren zum Schutz eines Computerprogramms gegen Beeinflussung durch ein Eindringprogramm oder durch eine Manipulationssoftware zur Manipulation von Computerprogrammen auf einem Computersystem. Das Computersystem hat in der Regel ein oder mehrere Prozessoren, einen Hauptspeicher zur Verarbeitung des Programms und ein Speichermedium.

Das Ziel von Softwareschutzmechanismen ist die Verhinderung von unerlaubter Vervielfältigung und Analyse des geistigen Eigentums (reverse engineering). In Abhängigkeit von Art und Wert der Software wird dabei ein Dongle, eine rechnergebundene Lizenz oder eine Lizenz auf einem Lizenzserver verwendet. Der Lizenzserver kann durch den Benutzer oder durch den Softwarehersteller in der Cloud betrieben werden und verwendet seinerseits wiederum einen Dongle oder eine rechnergebundene Lizenz. Eine Übersicht über gängige Softwareschutzmechanismen wird beispielsweise durch US2005/183072A1 oder US2010/017879A1 gegeben.

Ein Angreifer (Hacker) versucht den Softwareschutz zu umgehen, um die Software oder geistiges Eigentum daraus selbst zu nutzen oder sie seinerseits als Raubkopie an einen nicht autorisierten Anwender zu verkaufen. Dieser weiß oft nicht, dass er eine Raubkopie erworben hat.

Bei den Methoden eines Angreifers (Hackers) unterscheidet man zwischen dynamischer und statischer Analyse. Bei der dynamischen Analyse führt der Hacker die Software in einem Debugger aus und beobachtet und verändert sie; oder er lauscht an der Schnittstelle zum Softwareschutz und speichert die Kommunikation für einen Playback-Hack. Bei der statischen Analyse wandelt der Hacker die Software mittels eines Disassemblers in lesbaren Code zurück oder entschlüsselt verschlüsselte Teile manuell. Vor allem bei modernen Programmiersprachen wie .NET und Java ist die Rückumwandlung in eine Hochsprache (C#, Java, VB) oft problemlos möglich. Bei nativer Windows-, Linux- oder OS-X-Programmierung wird der Code in Assemblerbefehle gewandelt. Softwareschutz-Methoden wie API-calls oder Obfuskierung durch Änderung von Namen können vom Hacker einfach umgangen werden. Moderne Softwareschutzverfahren verwenden Kryptographie und setzen diese zum Verschlüsseln von ausführbarem Code und Daten, sowie für Challenge-Response-Abfragen ein. Die dafür verwendeten geheimen Schlüssel werden in einem Dongle gespeichert.

Durch den Einsatz von Verschlüsselung kann ein nach Stand der Technik sicherer Schutz erzielt werden, wenn man annimmt, dass der Hacker keinen Dongle mit den entsprechenden Schlüsseln besitzt.

In der Praxis ist diese Annahme nicht zutreffend. Der Dongle kann vom Hacker zwar nicht simuliert oder kopiert werden (Black-Box), die Software wird aber mit Dongle verkauft. Im Gegensatz zur Nachrichtenverschlüsselung besitzt der Benutzer einen Schlüssel, hat aber kein Interesse diesen geheim zu halten. Der Schlüssel wird von der Software automatisch verwendet. Bei aktuellen Softwareschutzverfahren ist aus der Kenntnis der Verwendung der Schlüssel in der Software eine automatische Rückumwandlung in ungeschützten Code theoretisch möglich. Dies gilt insbesondere, wenn das Schutzsystem dem Hacker nach einer ersten ausführlichen Analyse bekannt ist. In aller Regel verfügt der Hacker sogar selber über eine Version des Schutzsystems (White-Box).

Aufgabe der vorliegenden Erfindung ist es, ein Verfahren vorzuschlagen, das auch bei Kenntnis des Schutzverfahrens einen hinreichenden Schutz gegen die Beeinflussung und Analyse eines zu schützenden Computerprogramms bietet.

Gelöst wird die vorliegende Aufgabe mit einem Verfahren mit den Merkmalen des Anspruchs 1 und durch ein Computersystem gemäß Anspruch 15.

Im Rahmen der Erfindung wurde erkannt, dass es nicht möglich ist, ein Computerprogramm oder ein Verfahren selbst dauerhaft durch Geheimhaltung zu schützen. Die in der Regel verwendeten Methoden zum Schutz eines Computerprogramms sind die Verschlüsselung von Teilen des Computerprogramms und Entschlüsselung zur Laufzeit, eine Debuggererkennung und in progressiven Verfahren, wie beispielsweise dem der Firma WIBU-SYSTEMS AG, das zusätzliche Sperren eines Dongles.

Es wurde weiter erkannt, dass die bisherigen Verfahren dem sogenannten Kerckhoffschen Prinzip widersprechen und dass ein Verfahren, das gerade auf dem Kerckhoffschen Prinzip beruht, auch dann einen sehr guten und zuverlässigen Schutz bietet, wenn das Verfahren selbst bekannt ist und ein Schlüssel vorhanden ist, um eine berechtigte Ausführung des Computer-Programms zu ermöglichen. Das Kerckhoffsche Prinzip, das Grundlage des erfindungsgemäßen Verfahrens ist, besagt, dass die Sicherheit eines Verfahrens oder eines Computerprogramms nicht von dessen Geheimhaltung selbst, sondern von der Geheimhaltung des bzw. der verwendeten Schlüssel abhängt. Damit wird dem Umstand Rechnung getragen, dass ein Angreifer früher oder später in den Besitz des Systems, also des geschützten Programms, kommen wird und dieses eingehend analysieren kann. Auch wenn ein Schlüssel zur Entschlüsselung des Computerprogramms vorhanden ist, darf es keinen Unterschied für das System machen, da die Sicherheit nur an dem verwendeten Schlüssel und nicht an der Geheimhaltung des Systems bzw. des Computerprogramms liegt. Somit hat auch ein interner Angreifer, der das System bzw. das Computerprogramm im Zweifel selbst erstellt hat, keine besseren Angriffsaussichten als ein externer Angreifer, der ein Eindringprogramm oder eine Manipulationssoftware zur Manipulation des geschützten Computerprogramms anwendet.

Dies bedeutet auch, dass selbst bei Kenntnis des Schutzverfahrens zum Schutz eines Computerprogramms, wie es beispielsweise ein Entwickler hat, kein nennenswerter Vorteil entsteht. Selbst wenn eine "Anleitung zum Brechen der Software" besteht, hat dies für einen Angreifer keinen Vorteil. Auch er muss weiterhin einen erheblichen Aufwand in das Brechen jeder einzelnen Instanz des Computerprogramms bzw. jedes einzelnen Moduls des Computerprogramms stecken.

Erfindungsgemäß sind wenigstens Teile des Computerprogramms verschlüsselt, um eine statische Analyse des Computerprogramms ohne eine Ausführung des Programms durch einen Prozessor zu verhindern. Ein zur Entschlüsselung des verschlüsselten Teils des Computerprogramms notwendiger Schlüssel ist in einem sicheren, also geschützten oder verschlüsselten Schlüsselspeicher abgelegt, der mit dem Computer kommuniziert. Es können auch mehrere Schlüssel verwendet werden. Im Gegensatz zum Stand der Technik, bei dem die verwendeten Schlüssel im Programm versteckt sind, wird im vorliegenden Verfahren eine Trennung von Programm und Schlüssel vorgenommen.

Erfindungsgemäß beruht das Verfahren zum Schutz eines Computerprogramms auf dem Kerckhoffschen Prinzip. Es sind somit das geschützte Computerprogramm und alle Teile des geschützten Computerprogramms, auch die verschlüsselten, frei und öffentlich zugänglich und somit offengelegt. Die Programmteile und die Programmstruktur werden nicht geheim gehalten. Eine Manipulationssoftware oder ein Eindringprogramm kann das geschützte Programm auslesen.

Die Struktur des geschützten Computerprogramms ist gegenüber dem ungeschützten Computerprogramm derart verändert, dass Teile des Computerprogramms mehrfach vorhanden sind. Die Auswahl, welche Teile eines Programms mehrfach in dem geschützten Computerprogramm implementiert werden, erfolgt auf Grund der Fachlichkeit des Programms, also in Kenntnis des Programmablaufs und des Zwecks und der Verwendung des zu schützenden Computerprogramms. Die mehrfach, wenigstens doppelt vorhandenen Teile des Programms werden also anhand der Ergebnisse im Programmablauf oder in Abhängigkeit von verarbeiteten Eingabewerten ausgewählt.

Dieses Vorgehen stellt für einen Angreifer oder Hacker eine Schwierigkeit dar. Es wurde erkannt, dass ein Angreifer sehr genau weiß, wie eine Software "geknackt" wird. Dabei werden von einem Angreifer in dem geschützten Computerprogramm Anfragen entfernt, Rückgabewerte geändert, verschlüsselter Code aufgefunden und entschlüsselt (soweit möglich). Es werden Memory Dumps durchgeführt und Programmcode gepatcht.

Ein Angreifer weiß jedoch nicht, wie das Computerprogramm benutzt wird. Er hat keine Kenntnisse über die Verwendung und die Ergebnisse. Er kann nicht überprüfen und beurteilen, ob ein Ergebnis oder ein Ausgabewert korrekt ist oder falsch. Er kann auch nicht entscheiden, ob Eingabewerte und Verarbeitungswerte innerhalb des Programms sinnvoll sind oder welche Eingabewerte an bestimmten Stellen im Programm sinnvoll sind. Er kann keine Entscheidungen treffen, die die sogenannte Fachlichkeit des Computerprogramms betreffen. Gerade dies setzt das erfindungsgemäße Verfahren aber voraus.

Im Rahmen der Erfindung wurde also erkannt, dass das Verfahren zum Schutz eines Computerprogramms auf dem fehlenden Fachwissen eines Angreifers und eines Eindringprogramms oder einer Manipulationssoftware aufbauen muss. Es kommt also auf die Fachlichkeit an. Die Methoden des Schutzes basieren auf der Komplexität des Computerprogramms und des Verfahrens zum Schutz und nutzen diese. Auf diese Weise sind die Funktionsweise des Verfahrens zum Schutz des Computerprogramms und die Funktionsweise des durch das Verfahren geschützten Computerprogramms nicht mehr trennbar und nur schwer nachvollziehbar. Dies gilt auch, wenn das geschützte Computerprogramm frei zugänglich und bekannt ist.

In einer bevorzugten Ausführungsform ist der zugangsbeschränkte, verschlüsselte oder geschützte und damit sichere Schlüsselspeicher ein Dongle, also ein externes, eigenständiges Gerät, wie etwa ein Token, ein USB-Stick oder eine Speicherkarte, die über eine Schnittstelle an das Computersystem angeschlossen werden, auf dem das geschützte Computerprogramm ausgeführt wird. Alternativ kann der Dongle nicht nur eine speziell für Schutzzwecke vorgesehene Hardware sein, sondern auch ein Standard-Token, das beispielsweise über PKCS#11 angesprochen wird. Ein solches Token hat zwar nur eingeschränkte Funktionalität, kann jedoch ebenfalls als sicherer Schlüsselspeicher eingesetzt werden. Alternativ kann dieser sichere (geschützte, z.B. verschlüsselte) Schlüsselspeicher das Speichermedium des Computers, auf dem das Computerprogramm abläuft, sein; insbesondere kann es ein geschützter Bereich des Speichermediums des Computers sein.

Das erfindungsgemäße, auch als Blurry-Box-Verfahren bezeichnete Verfahren zum Schutz eines Computerprogramms umfasst erfindungsgemäß folgende Schritte:
Zunächst wird das zu schützende Computerprogramm in einzelne Module aufgeteilt. Diese Module können in einer bevorzugten Ausführungsform einen oder mehrere Funktionsblöcke umfassen. Als Funktionsblock wird dabei eine funktionale Einheit des Computerprogramms verstanden, die eine (gewisse) vordefinierte, in sich abgeschlossene Funktionalität erbringt. Dies kann beispielsweise ein Block sein, der in einer Applikation eine Kennlinie zur Steuerung eines Prozesses bereit stellt, oder ein Filter, der für eine Bildverarbeitung Dienste wie etwa eine Kontrastverstärkung vornimmt. Somit ist ein Funktionsblock eine logische Einheit innerhalb des Computerprogramms, der bestimmte Funktionen erbringt. Ein Modul kann einen oder mehrere Funktionsblöcke umfassen, jedoch auch anderen Softwarecode.

Gemäß dem Verfahren wird wenigstens ein Teil des Computerprogramms und wenigstens eines der Module des Computerprogramms verschlüsselt. Im einfachsten Fall ist also ein Funktionsblock verschlüsselt. Wenigstens ein zur Entschlüsselung des Computerprogramms und seiner Teile benötigter Schlüssel wird in einem geschützten Schlüsselspeicher abgelegt. Ein derartiger Schlüsselspeicher kann ein Hardware-Dongle sein oder als Software implementiert sein, beispielsweise im Speichermedium des Computersystems.

In einem weiteren Schritt wird ein für das Computerprogramm spezifischer Zustandswert erzeugt, oder, sofern er bereits erzeugt wurde, identifiziert. Der Zustandswert im Sinne der Anmeldung ist charakteristisch für den ablaufenden Prozess in dem Computersystem. Er beschreibt den Prozess oder dessen (momentanen) Zustand, wobei unter dem Begriff Prozess ein in den Hauptspeicher geladenes und in der Bearbeitung befindliches Computerprogramm verstanden wird. Der Zustandswert ist ein programminterner logischer Wert oder Zustand des Programms und beruht auf der Fachlichkeit des Programms, also auf dem Programminhalt. Der Zustandswert ist keine physikalische Repräsentation im Computer oder Hauptspeicher des Computers und somit kein außerhalb des Programms verwendeter Wert, wie z.B. eine floating-point-Zahl im Hauptspeicher. Der Zustandswert ist vielmehr ein für den Programmabluft spezifischer interner Wert, z.B kann er die Härte eines Bodens repräsentieren und dann Werte wie Granit, Lehm, Holz, Teppich etc. annehmen oder er kann den Verbrennungsdruck in einem Motor darstellen und z.B. einen Druck zwischen 0 und 200 bar, zwischen 200 und 500 bar, zwischen 500 und 1200 bar oder größer 1200 bar repräsentieren.

Der Zustandswert kann aber auch ein Parameter, eine globale Variable, eine Aufrufreihenfolge von Funktionen oder Funktionsblöcken oder die Aufrufhierarchie von Funktionen innerhalb des Computerprogramms umfassen. Die Zustandswerte sind im Stack oder anderen Teilen des Speichers des Computersystems sichtbar und in der Regel auslesbar. Dieser Zustandswert wird beim Ausführen des Computerprogramms durch den Prozessor in dem Hauptspeicher des Computersystems, in dem das Computerprogramm geladen ist, in einem in dem Hauptspeicher geladenen Modul verarbeitet. Der Zustandswert wird also als Eingangsparameter an das Modul übergeben und ist für dessen Ausführung notwendig.

In einem weiteren Schritt prüft das erfindungsgemäße automatisierte Verfahren, ob der verarbeitete Zustandswert für das Modul gültig ist. Dabei kann überprüft werden, ob der Zustandswert einen vorgegebenen und erwarteten Wert aufweist, in einem vorbestimmten Wertebereich liegt, eine erwartete Variable ist oder ob es sich hierbei um einen weiteren, speziellen, für das aufgerufene Modul spezifischen Aufrufparameter handelt. Wird ein ungültiger Zustandswert ermittelt, erfolgt eine Änderung des Programmablaufs des Computerprogramms. Dieses kann zu einem Programmabbruch oder zu einer Ausgabe eines Alarms führen. Der Programmabbruch kann sofort oder verzögert erfolgen, so dass ein Angreifer nicht weiß, welcher Modulaufruf oder welches Modul den Abbruch ausgelöst hat. Die Verzögerung kann zeitlich sein, zufällig oder in Abhängigkeit von einer bestimmten Anzahl weiterer Aufrufe, z.B. von Modulaufrufe, z.B. von 3, 5, 10 Aufrufen. Die Änderung im Programmablauf kann auch ein stiller Alarm sein, der beispielsweise als eine Meldung an einen externen Serverrechner oder eine gewünschte Webadresse oder E-Mailadresse gesendet wird.

In einer bevorzugten Ausführungsform des Verfahrens wird zunächst das zu schützende Computerprogramm in Module aufgeteilt. Wenigstens eines der Module A, wird dupliziert, so dass die beiden identischen Module A1 und A2 entstehen. Die beiden Module werden bevorzugt in einem weiteren Schritt modifiziert. Hierbei erfolgt ein Festlegen je eines Wertebereichs α1, α2 für jedes Modul A1, A2. Der Wertebereich gilt für wenigstens eines für die Ausführung des Moduls erforderlichen Eingangsparameters a1, a2.

In einem nächsten Schritt werden die Module A1, A2 bevorzugt verschlüsselt. Gemäß der bevorzugten Ausführungsform des erfindungsgemäßen Schutzverfahrens wird nun der Aufruf eines Moduls mit wenigstens einem Parameter a1, a2, an den Schlüsselspeicher umgelenkt. Der Schlüsselspeicher, der bevorzugt ein Dongle ist, erhält den Eingangsparameter a1, a2, der ihm durch den Modulaufruf übergeben wurde. In dem Schlüsselspeicher wird der Eingangsparameter a1, a2 gegen den für das aufgerufene Modul A1, A2 festgelegte Wertebereich α1, α2 geprüft. In dem Schlüsselspeicher wird dann entschieden, ob ein berechtigter Modulaufruf vorliegt. Es wird also verifiziert, ob geeignete Eingangsparameter für den Modulaufruf vorliegen und der Modulaufruf gültig ist. Falls eine solche Berechtigung ermittelt wird, wird ein Auswahlparameter i an den aufrufenden Programmteil zurückgegeben. Der Auswahlparameter i dient zur Auswahl des i-ten Moduls Ai.

Das Ziel des Angreifers ist, das richtige Modul oder die richtige Modulvariante (A1, A2) auszuwählen, ohne den Schlüsselspeicher zu verwenden. Dies kann nur durch ein Ausprobieren erfolgen. Um ein mehrfaches Probieren eines Angreifers zu verhindern oder die Zahl der Versuche zur Ermittlung des gültigen Eingangsparameters für das jeweilige Modul zu reduzieren, kann bei einer Fehleingabe der Programmablauf so geändert werden, dass ein Alarm ausgegeben wird oder eine Sperrung des Programms erfolgt. Dies kann sofort oder zeitverzögert erfolgen. Alternativ kann der Schlüsselspeicher gesperrt werden.

Wenn die Module oder Funktionsblöcke verschlüsselt sind, wird die Hürde für einen Angreifer nochmals erhöht, da er nur den verschlüsselten Programmteil sieht und nicht auf deren Inhalt rückschließen kann. Bei einer hohen Komplexität des Programms und einer Vielzahl von Module bietet aber auch eine Variante ohne Verschlüsselung der betreffenden Module einen hinreichenden Schutz.

Wenn die Module verschlüsselt sind, erfolgt nach Rückgabe des Auswahlparameters i an den aufgerufenen Programmteil in dem geschützten Programm die Übergabe des Eingangsparameters a1, a2 an den Dongle gemeinsam mit dem Befehl, das ausgewählte Modul Ai zu entschlüsseln. Passen Modul und Eingangsparameter zusammen, wird der Schlüsselspeicher, z. B. Dongle, das Modul entschlüsseln und ausführen. Es wird ein Ergebniswert des Moduls zurückgegeben, der weiter verarbeitet werden kann.

Es hat sich gezeigt, dass mit dem erfindungsgemäßen Verfahren zum Schutz eines Computerprogramms ein robuster Schutz sowohl gegen statische wie auch dynamische Angriffe durch Manipulationssoftware ermöglicht wird. Generell wird bei einem Softwareschutz zwischen einem statischen und dynamischen Angreifer unterschieden. Das Angriffsziel ist bei beiden Typen die Rekonstruktion des Computer-Programmes, so dass es auch ohne eine von dem Computerprogrammhersteller zur Verfügung gestellte Berechtigung in Form eines oder mehrerer kryptographischer Schlüssel oder eine entsprechende Lizenz, die beispielsweise in einem Schlüsselspeicher hinterlegt sein kann, lauffähig ist.

Das erfindungsgemäße Verfahren zum Schutz bietet selbst unter folgenden Annahmen Schutz:
- Der Angreifer besitzt mindestens eine Lizenz der Software. Er ist in der Lage, sich weitere Lizenzen zu besorgen, die er beispielsweise käuflich erwerben kann. Die Anzahl aller Lizenzen ist durch einen Parameter k beschränkt, der letztlich durch den Hersteller des Computerprogramms definiert sein kann.
- Ein Angreifer hat Zugriff auf den ausgelieferten Code. Er kennt das Computerprogramm und er kennt das zum Schutz des Computerprogramms verwendete Verfahren. Insbesondere weiß er, dass das Computerprogramm in Module oder Funktionsblöcke unterteilt ist.
- Ein Angreifer hat Zugriff auf die von einem Schlüsselspeicher bereit gestellten Schnittstellen, solange seine Lizenz gültig ist. In der Regel ist der Schlüsselspeicher ein Dongle, also eine Hardware oder ein Gerät, das an eine Schnittstelle des Computersystems angeschlossen wird.
- Es wird davon ausgegangen, dass die in dem Schlüsselspeicher hinterlegten Schlüssel nicht extrahiert werden können. Im Falle eines Dongles lassen sich die auf dem Dongle hinterlegten Schlüssel zwar verwenden, sie können jedoch nicht vom Dongle getrennt und beispielsweise vervielfältigt werden.
- Es wird für den Schutz des Verfahrens zum Schutz eines Computerprogramms jedoch vorausgesetzt, dass kein Fachwissen über die eigentliche Funktionsweise des Computerprogramms vorhanden ist.

Bei einem statisch ausgeführten Angriffsszenario verfolgt der Angreifer eine vom Computerprogramm unabhängige Angriffsstrategie. Er kennt das Computerprogramm so weit, dass er die einzelnen Blöcke sieht. Er hat Zugriff auf den Programmcode des Computerprogramms und die verschlüsselten Teile. Er kann Entschlüsselungsanfragen für die einzelnen Funktionsblöcke an den Schlüsselspeicher stellen. Gegen diesen Angreifer kann ein sehr hoher Schutz gewährleistet werden, da er nur mit einer sehr geringen Wahrscheinlichkeit, die von dem oben genannten Parameter k abhängt, die korrekte Abfolge von Funktionsblöcken raten kann. Ein Angreifer wird demnach scheitern. Es lässt sich über einen sogenannten Reduktionsbeweis zeigen, dass der Angreifer durch die Entschlüsselungsanfragen und die Kenntnis des verschlüsselten in Blöcke unterteilten Computerprogramms nichts darüber hinaus lernen kann. Der Reduktionsbeweis bezieht sich auf die Sicherheit des verwendeten Verschlüsselungsverfahrens zum Schutz des Computerprogramms.

Bei einem dynamischen Angriffsszenario wird davon ausgegangen, dass das Programm ausgeführt wird. Hier wird angenommen, dass bestimmte triviale Angriffe nicht verhindert werden können. Derartige Angriffe lassen sich in zwei Kategorien einteilen:

| | |
|---|---|
| Kategorie 1: | Mitschneiden von Eingaben und Ausgaben des Computerprogramms |
| | Führt der Angreifer das Programm aus, so lernt er aus seiner Eingabe die von dem Computerprogramm erzeugte Ausgabe. Beispielsweise kann er bestimmte Parameter an das Programm senden und die durch Ausführung der entsprechenden Teile hervorgerufenen Ausgaben erkennen. |
| Kategorie 2: | Mitschneiden entschlüsselter Funktionsblöcke oder Module |
| | Während eines Ablaufs des Computerprogramms kann der Angreifer die im Klartext im Arbeitsspeicher liegenden Funktionsblöcke oder Module mitschneiden und zusammensetzen. Dadurch lernt er die zu einer Eingabe gehörenden Funktionsblöcke. Er lernt auch die zu potentiell weiteren Eingaben gehörenden Funktionsblöcke. Ein Angriff der Kategorie 2 ist also stärker als ein Angriff der Kategorie 1. |

Diese dynamischen Angriffe der beiden Kategorien können von einem Angreifer häufig genug mit unterschiedlichen Eingabe wiederholt werden. So ist es einem Angreifer letztlich möglich, das komplette Programm zu rekonstruieren. Angriffe der beiden Kategorien können unter theoretischen Gesichtspunkten nicht verhindert werden. Sie sind aber für Computerprogramme realistischer Größe sehr aufwändig und rechtfertigen den Aufwand in der Regel selten.

Bei einer formalen Betrachtung der Sicherheit eines Verfahrens zum Schutz eines Computerprogramms werden also Angriffe betrachtet, die über diese trivialen Angriffe hinausgehen.

In einer besonderen Ausführungsform des Verfahrens zum Schutz eines Computerprogramms wird deshalb wenigstens ein Funktionsblock oder ein Modul durch eine Mehrzahl von Varianten ersetzt. Besonders bevorzugt können die Varianten nach dem Kompilieren des zu schützenden Computerprogramms erzeugt werden. Dabei wird bevorzugt der Funktionsblock oder das Modul vervielfältigt, also dupliziert. Es können mehrere identische Varianten vorhanden sein, die jedoch auch modifiziert werden können. Bevorzugt sind die einzelnen Varianten für die Verarbeitung von unterschiedlichen Eingangsparametern oder Zustandswerten zuständig und nur mit diesen gültig und führen zu einem richtigen Ergebnis in der Ausführung. Die Auswahl, welche Variante im Programmablauf verwendet wird, hängt bevorzugt von dem Eingangsparameter oder Zustandswert ab. Die Ausführung einer Variante mit falschen Parametern kann zum Abbruch des Programmablaufs oder zum Löschen der Schlüssel oder einzelner Teile des Computerprogramms führen.

Bevorzugt erfolgt die Erzeugung der Varianten der Module oder Funktionsblöcke also durch Duplizierung, bevorzugt mit einer Modifikation. Alternativ und ebenfalls bevorzugt kann die Erstellung von Varianten so durch eine Strukturanalyse des Computerprogramms oder anhand von Metainformationen zu dem Computerprogramm erfolgen, die dem Verfahren zum Schutz des Computerprogramms bekannt sein müssen. Die Metainformationen beruhen auf der Fachlichkeit des Computerprogramms und hängen von der Art und Verwendung des Programms ab. Die Varianten der einzelnen Funktionsblöcke können als Ganzes funktional identisch zum Originalfunktionsblock sein oder nur für Teilbereiche der möglichen Eingaben. Beispielsweise ist es möglich, wenn in einem Funktionsblock eine Kennlinie hinterlegt ist und ausgeführt wird, dass diese Kennlinien in unterschiedliche Wertebereiche unterteilt sind und die Varianten der Funktionsblöcke einen bestimmten Bereich der Kennlinie abdecken. Dabei können die Varianten so ausgestaltet sein, dass der entsprechende Wertebereich, für den die Variante angewendet werden soll, mit dem Originalfunktionsblock identisch ist, die Kennlinie außerhalb des spezifischen Wertebereichs jedoch unterschiedlich ist, so dass ein Aufruf der Variante des Funktionsblocks außerhalb des spezifischen Wertebereichs zu einem falschen Rückgabeergebnis führt. Beispielsweise wäre es möglich, bei einer Motorsteuerung unterschiedliche Kennlinien in einzelnen Varianten zu hinterlegen, etwa für eine Kaltlaufphase, den Normalbetrieb des Motors, einen Sportbetrieb, einen Notbetrieb und einen Energiesparbetrieb. Im Falle, dass der Funktionsblock einen Filter für eine Bildverarbeitung darstellt, könnten die Kontrastverstärkung für farbige Bilder und für Schwarz-Weiß-Bilder unterschiedliche Algorithmen zur Kontrastverstärkung umfassen, so dass jede Variante abhängig von dem Eingangsparameter (Aufrufparameter, Zustandswert) zu unterschiedlichen Ergebnissen führt.

In einer bevorzugten Ausführungsform wird eine Variante eines Funktionsblocks oder Moduls in Abhängigkeit von einem Zustandswert ausgewählt und ausgeführt. Ist der Zustandswert beispielsweise die Betriebsart eines Motors, kann, wie oben erläutert, die jeweils richtige Variante für den Zustandswert, also den Betriebszustand des Motors, ausgewählt werden.

Bevorzugt kann mittels des Schlüsselspeichers kontrolliert werden, ob der Zustandswert mit der aufgerufenen Variante korrespondiert. Unter einem Zustandswert im Sinne der Erfindung wird dabei nicht nur ein Aufrufparameter oder Parameter im Programmablauf des Computerprogramms verstanden, sondern beispielsweise auch eine globale Variable sein kann. Daneben kann der Zustandswert auch eine Aufrufreihenfolge oder eine Aufrufhierarchie von einzelnen Funktionsblöcken, Varianten oder Modulen umfassen. Der Schlüsselspeicher kontrolliert also bevorzugt, ob der Aufruf- oder Eingangsparameter (Zustandswert), mit dem die Variante aufgerufen wird, zu der Variante passt und von der Variante erwartet wird. Es wird also geprüft, ob ein für die entsprechende Variante gültiger Aufruf- oder Eingangsparameter verwendet wird.

In einer bevorzugten Ausführungsform können die Varianten derart modifiziert sein, dass in einer Variante ein bestimmter Wertebereich oder Teilbereich für den Zustandswert festgelegt ist und der Zustandswert beim Aufrufen der Variante innerhalb des festgelegten Wertebereichs liegen muss, damit ein gültiger Aufruf erkannt wird und eine Ausführung stattfindet. Beispielsweise wäre es möglich, dass bei einem Aufrufparameter (Zustandswert) im Wertebereich von 1 bis 10 die Variante 1 ausgewählt wird, während bei einem Wert im Bereich 11 bis 20 die Variante 2 und bei einem Wert im Wertebereich größer 20 die Variante 3 aufgerufen wird. Die Überprüfung kann entweder im Prozessor beim Ablauf des Computerprogramms, also bei der Ausführung des Prozesses erfolgen, oder beispielsweise mithilfe des Schlüsselspeichers. Es ist auch möglich, dass hierzu ein separater Schlüsselspeicher oder ein geschützter Teil des Speichermediums des Computersystems verwendet wird.

In einer bevorzugten Ausführungsform des Verfahrens zum Schutz eines Computerprogramms erfolgt die Auswahl des Aufrufs einer Variante anhand von vordefinierten Werten. Diese Werte sind bevorzugt in einer Tabelle abgelegt, beispielsweise im Schlüsselspeicher oder in einem geschützten Bereich des Speichermediums des Computersystems. Die Werte können jedoch auch algorithmisch bestimmt werden, wobei sie besonders bevorzugt während des Prozessablaufs berechnet werden oder aus weiteren Zustandswerten des Prozesses ermittelt werden. Beispielsweise ließe sich hier kombinieren, welche Varianten oder Funktionsblöcke oder Module vorher aufgerufen wurden oder ob ein bestimmter Betriebszustand, in Bezug auf eine Motorsteuerung beispielsweise der Motorbetrieb, vorherrschen. Es ist auch möglich, die vordefinierten Werte zur Auswahl des Aufrufs einer Variante mittels des Schlüsselspeichers zu ermitteln.

Das Verfahren zum Schutz eines Computerprogramms verwendet für die Variantenauswahl also unterschiedliche Möglichkeiten. Das führt dazu, dass sich äußerlich gleiche Varianten eines Funktionsblocks unterschiedlich verhalten können, je nachdem, ob sie im vorgesehenen Wertebereich und Gültigkeitsbereich eingesetzt werden oder nicht.

Das Verwenden von Varianten bietet auch die Möglichkeit, bestimmte Programmstrukturen zu hinterlegen. Beispielsweise können bei bestimmten Programmstrukturen die kaskadierten Bedingungen (If-Statements oder sog. Case- oder Switch-Statements) für einzelne Abfragen oder beispielsweise If-Statements unterschiedliche Varianten verwendet werden.

In einer bevorzugten Ausführungsform ist wenigstens eine der Varianten verschlüsselt. Der zur Entschlüsselung notwendige Schlüssel kann in dem sicheren Schlüsselspeicher gespeichert werden. Bevorzugt kann dann der Prozessor zur Entschlüsselung mit dem sicheren Schlüsselspeicher kommunizieren. Dabei ist es möglich, dass für unterschiedliche Varianten von Funktionsblöcken unterschiedliche Schlüssel in dem Schlüsselspeicher hinterlegt sind. Es lassen sich aber auch bestimmte Varianten gruppieren, so dass für deren Entschlüsselung lediglich ein Schlüssel erforderlich ist, der ebenfalls im Schlüsselspeicher gespeichert ist.

Dieses erfindungsgemäße Prinzip beruht auf der Erkenntnis, dass die Verlagerung von Anwendungscode, also Teilen des Computerprogramms, in den Schlüsselspeicher auf große Implementierungsprobleme stößt. Dagegen wurde erkannt, dass es relativ einfach möglich ist, die Auswahl der zu verwendeten Varianten in dem Schlüsselspeicher zu berechnen. Damit ist es mit einer statischen Analyse zum Angriff auf das geschützte Computerprogramm nicht mehr möglich zu ermitteln, welche Variante in einem speziellen Fall aufgerufen werden muss, ohne den Code direkt auszuführen. Selbst bei einer dynamischen Analyse stößt der Angreifer auf Schwierigkeiten, da er je nach Aufruf der Varianten nach der Entschlüsselung gegebenenfalls zu unterschiedlichen Ergebnissen kommt, da er die falsche Variante für den entsprechenden Wertebereich verwendet hat.

Bevorzugt ist der Schlüsselspeicher ein Gerät, z.B. ein Dongle. Wenn das Gerät die Auswahl der Varianten oder weitere Überprüfungen vornimmt, umfasst es bevorzugt einen Prozessor. Optional kann ein Speicher, z.B. ein Datenspeicher, vorhanden sein. Der Prozessor führt einen Auswahlalgorithmus aus, um an Hand von Eingangsparametern die Modulauswahl zu treffen. Es kann als Ergebnis ein Index oder Parameter zurückgegeben werden.

In einer bevorzugten Ausführungsform sind alle Varianten verschlüsselt, wobei die notwendigen Schlüssel in dem Schlüsselspeicher abgelegt sind, so dass nur der Schlüsselspeicher eine Variante eines Funktionsblocks entschlüsseln kann.

In einer ebenfalls bevorzugten Ausführungsform werden gemäß dem Verfahren weitere Funktionsblöcke zu den Varianten generiert, die bei einer konkreten Ausführung des Programms nicht aufgerufen werden. Bekommt der Schlüsselspeicher die Anweisung, einen derartigen Funktionsblock, der als Falle eingesetzt wird, zu entschlüsseln, wird ein Einbruchsversuch eines Eindringprogramms oder einer Manipulationssoftware erkannt.

Gemäß einer bevorzugten Ausführungsform des Verfahrens umfasst das Computerprogramm auch Module, Funktionsblöcke oder Varianten, die von dem (ordnungsgemäßen) Prozess nie ausgeführt werden. Deren Aufruf oder deren Ausführung führt zu einem Prozessabbruch, zum Sperren des Schlüsselspeichers und/oder zum Löschen des Schlüsselspeichers. Somit wird auch eine dynamische Analyse des zu schützenden Programms verhindert. Bei der dynamischen Analyse betrachtet das Eindringprogramm das auszuführende und zu schützende Computerprogramm während der Ausführung. Hierzu werden normalerweise sogenannte Debugger eingesetzt. Da das zu schützende Computerprogramm ausgeführt wird, kann es auch mit der Umwelt und insbesondere auch mit den Angreifern und der Schadsoftware bzw. Manipulationssoftware interagieren. Wird durch das Verfahren eine Beeinflussung oder Manipulation des Computerprogramms erkannt, so können Gegenmaßnahmen eingeleitet werden, beispielsweise die oben Genannten, wie Sperren oder Löschen des Schlüsselspeichers.

In einer bevorzugten Ausführungsform wird mittels des Verfahrens ein Einbruchsversuch oder eine Manipulation durch eine Manipulationssoftware erkannt. Dies kann beispielsweise dadurch erfolgen, dass bei einer dynamischen Analyse eine Falle ausgelöst wird, also ein Funktionsblock aufgerufen wird, der von dem Computerprogramm nie aufgerufen wird oder lediglich zu einem anderen Zeitpunkt oder von einer anderen Adresse aus aufgerufen wird. Im Falle des Erkennens eines Einbruchsversuchs kann ein Alarm ausgelöst werden, beispielsweise durch Absenden einer Alarmmitteilung an einen entfernten Rechner. Alternativ kann der Schlüsselspeicher manipuliert werden und der Prozess abgebrochen werden.

In einer bevorzugten Ausführungsform ist der Zustandswert, der beim Ausführen des Computerprogramms durch den Prozessor im Hauptspeicher in einem Modul verarbeitet wird, ein Wert bezüglich des Prozesszustands des Computerprogramms. Hierbei wird überprüft, ob der Zustandswert in einem gültigen, vordefinierten Gültigkeitsbereich liegt. Bevorzugt ist der Gültigkeitsbereich in der Variante hinterlegt, bevorzugt in verschlüsselter Form.

Beispielsweise können in den einzelnen Funktionsblöcken oder Varianten Teile der Aufrufhierarchie oder Aufrufreihenfolge der Funktionsblöcke im Computerprogramm hinterlegt sein. Alternativ ist es möglich, dass diese Aufrufreihenfolge oder Aufrufhierarchie, also die korrekte Abfolge von Aufrufen von Funktionsblöcken in dem Schlüsselspeicher hinterlegt ist. Der Aufruf eines Moduls, eines Funktionsblocks oder einer Variante erfolgt aufgrund eines Zustandswerts, der einen Wert aus der Aufrufhierarchie oder der Aufrufreihenfolge repräsentiert. Bevorzugt gibt der Zustandswert Auskunft darüber, welches Modul, welcher Funktionsblock oder welche Variante als nächstes aufgerufen wird. Ebenfalls bevorzugt kann alternativ der Zustandswert Auskunft darüber geben, welches Modul, welcher Funktionsblock oder welche Variante als letzte aufgerufen wurde.

Wird der Schlüsselspeicher angewiesen, einen Funktionsblock zu entschlüsseln, der aufgrund des Programmablaufs nicht an der Reihe ist, kann der Schlüsselspeicher gesperrt werden. Die Lizenz zur Ausführung des Computerprogramms wird dadurch ungültig. Ein ungültiger Aufruf kann beispielsweise dadurch erkannt werden, dass bei einer Entschlüsselung die Liste der möglichen nächsten Entschlüsselungen mit angegeben werden kann. Alternativ kann bei einer Entschlüsselung mit angegeben werden, welche Entschlüsselungen vor dieser Entschlüsselung stattgefunden haben dürfen oder müssen, also welcher Funktionsblock vor Aufruf dieses Funktionsblocks abgearbeitet und aufgerufen werden dürfte.

Als weitere Möglichkeit kann auch eine Entschlüsselung so spezifiziert werden, dass sie unabhängig von ihren Vorgängern möglich ist. Die Listen der zulässigen Vorgänger oder Nachfolger wird bevorzugt kryptographisch gesichert an den Schlüsselspeicher übertragen, um Modifikationen durch einen Angreifer oder eine Manipulationssoftware unmöglich zu machen. Hierdurch wird ebenfalls sichergestellt, dass die Liste der möglichen Funktionsblock-Vorgänger oder -Nachfolger von einem Angreifer oder einer Schadsoftware nicht im Klartext einsehbar ist. Somit ist es einer Manipulationssoftware nicht möglich, die Ausführungsreihenfolge der Funktionsblöcke frei und unabhängig von der Programmlogik und dem im Computerprogramm festgelegten Prozessablauf zu wählen.

In einer bevorzugten Ausführungsform wird der Zustandswert gemäß dem Verfahren in dem sicheren Schlüsselspeicher verarbeitet oder an einem Speicherort des Computers, der das Speichermedium oder auch der Schlüsselspeicher oder ein Dongle sein kann, abgelegt. Da der Schlüsselspeicher lediglich die Entschlüsselung der Funktionsblöcke verwaltet und ausführt, und da vorausgesetzt werden kann, dass nach einer Entschlüsselung eines Funktionsblocks auch seine Ausführung erfolgt, kann durch die Überwachung der Entschlüsselungsanfragen an den Schlüsselspeicher der Programmablauf, der bei einer dynamischen Analyse durchgeführt wird, überwacht werden.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar. Es zeigen:
- Fig. 1: eine Strukturdarstellung des erfindungsgemäßen Verfahrens zum Schutz eines Computerprogramms;
- Fig. 2: ein Beispiel einer Aufrufstruktur einzelner Module;
- Fig. 3: ein Beispiel einer Aufrufstruktur eines Computerprogramms mit Varianten;
- Fig. 4a - 4f: ein Beispiel des Verfahrensablaufs zur Erzeugung von Modulvarianten; und
- Fig. 5: ein Prinzipbild eines in den Hauptspeicher geladenen Computerprogramms.

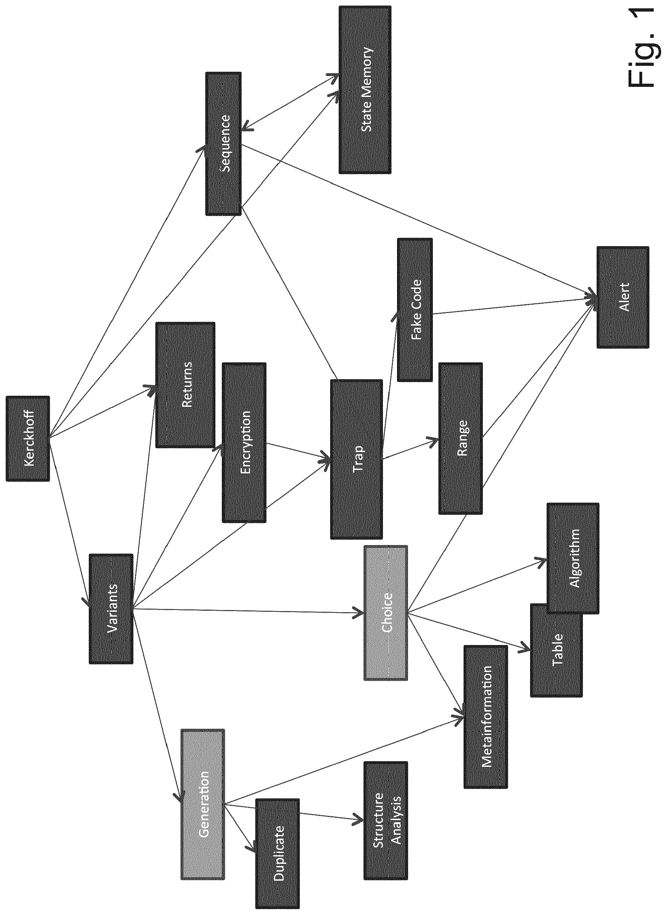

Fig. 1 zeigt die generelle Struktur des Verfahrens zum Schutz eines Computerprogramms nach dem Kerckhoffschen Prinzip. Die unterschiedlichen Maßnahmen, die von dem erfindungsgemäßen Programm verwendet werden, sind als Strukturbaum gezeigt.

Zunächst ist die Maßnahme der Variantenbildung (Variants) zu nennen. Hierbei ergeben sich mehrere Anforderungen und Möglichkeiten. Im Bereich der Erzeugung (Generation) gibt es die schon oben im Text genannten Möglichkeiten der Duplizierung eines Funktionsblocks oder Moduls, der Erstellung einer Variante eines Funktionsblocks oder Moduls aufgrund der Strukturanalyse. Beispielsweise können unterschiedliche Entscheidungsbäume innerhalb eines Funktionsblocks oder Moduls durch eine Variante repräsentiert werden. Mögliche Einsatzszenarien sind hierbei sogenannte einzelne oder kaskadierte Bedingungen wie IF-Statements. Eine weitere Möglichkeit zur Variantenerzeugung beruht auf der Verwendung von Metainformationen. Dies sind zusätzliche Informationen zu dem zu schützenden Computerprogramm. Beispielsweise können unterschiedliche Gültigkeitsbereiche bei der Verarbeitung des Programms vorliegen, etwa bei einer Motorsteuerung, die unterschiedlichen Betriebsarten wie Notlaufbetrieb, Kaltlaufphase oder Sportbetrieb.

Die Auswahl der einzelnen Varianten erfolgt bevorzugt entweder aufgrund der Metainformationen, wenn einzelne Bereiche angegeben sind. Eine weitere Möglichkeit ist eine tabellengesteuerte Auswahl. Das Verfahren zum Schutz eines Computerprogramms kann in einer Tabelle willkürlich festlegen, welche Eingabewerte für welche Variante verwendet werden müssen. Bevorzugt ist eine derartige Tabelle verschlüsselt. Besonders bevorzugt ist sie im Computerprogramm selbst bereits abgelegt.

Eine weitere Möglichkeit zur Auswahl der Varianten besteht in der Berechnung der einzelnen Varianten durch Algorithmen. Dies kann im Schlüsselspeicher erfolgen. Eine statische Analyse, bei der lediglich das Programm analysiert wird ohne den eigentlichen Code auszuführen, ist dann nicht mehr möglich. Bei der statischen Analyse läuft das Programm nicht ab, sondern wird lediglich betrachtet. Es hat dann zwar prinzipiell keine aktiven Abwehrmaßnahmen. Durch eine derartige Variantenbildung und eine erst während des Prozesses (Programmablaufs) stattfindende Auswahl verschiedener Varianten wird die statische Analyse jedoch zuverlässig verhindert. Diese sowie aktiven Abwehrmaßnahmen erfordern, dass das Programm ausgeführt wird und damit wenigstens zeitweise in der Kontrolle des Computersystems ist.

Bei der Verwendung von Varianten sind die Varianten bevorzugt verschlüsselt. Somit lassen sich die Varianten nicht ohne Weiteres analysieren, insbesondere nicht durch eine statische Analyse.

Eine weitere Möglichkeit ist, Varianten zu bilden, die als Fallen (Trap) eingesetzt werden. Diese Varianten werden von dem Computerprogramm bei einer ordnungsgemäßen Ausführung nie aufgerufen oder adressiert. Wird eine derartige Falle durch eine Manipulationssoftware aufgerufen, so kann der Zugriff auf eine Lizenz, die bevorzugt im Schlüsselspeicher oder Dongle abgelegt ist, erfolgen. Damit wird verhindert, dass eine Manipulationssoftware oder ein Eindringprogramm weiter in dem Programm vorgehen kann, da die notwendige Lizenz fehlt. Einem Angreifer oder einer Manipulationssoftware wird damit die Möglichkeit entzogen, nach einem Fehlversuch einfach frisch anzufangen.

Neben der Möglichkeit, Fallen durch sogenannten unmöglichen Code (Fake-Code) zu verwenden, gibt es auch die Möglichkeit, eine Bereichsüberprüfung für den Zustandswert beim Aufrufen der Variante durchzuführen. Wenn Varianten nur für bestimmte Wertebereiche zugelassen werden, aber dennoch die Möglichkeit besteht, diese Varianten auch für andere Wertebereiche aufzurufen, kann auch hierin eine Falle gesehen werden.

Sowohl bei der Verwendung von Varianten als auch bei dem Ablauf des Programms und seiner Funktionsblöcke erfolgen typischerweise Aufrufe der einzelnen Funktionsblöcke oder Varianten durch sogenannte Calls. Der Rücksprung nach Ausführung des Funktionsblocks erfolgt durch sogenannte Returns. Eine weitere bevorzugte Schutzmaßnahme des erfindungsgemäßen Verfahrens ist die Steuerung und Überwachung des Rücksprungs. Dieser kann lediglich erfolgen, wenn die Lizenz vorhanden ist und ausgeführt wird. Beispielsweise kann aus bestimmten Parametern berechnet werden, ob eine gültige Lizenz vorliegt und ob ein gültiger Rücksprung erfolgen kann. Es kann auch festgelegt werden, wohin der Rücksprung geschieht.

Bevorzugt wird bei der Ausführung der Berechnung mittels Parameter überprüft, ob der Wertebereich, in dem die Parameter liegen, verändert (gepatched) wurde. Ist dies der Fall, soll das Computerprogram die Ausführung stoppen.

In einer bevorzugten Ausführungsform des Verfahrens zum Schutz eines Computerprogramms ist wenigstens einer der für den Aufruf einzelner Varianten oder Funktionsblöcke notwendigen Calls verschlüsselt. Bevorzugt werden wenigstens einige dieser Aufrufe in dem Computerprogramm durch verschlüsselte "Trampolinsprünge" abgesichert. Hierbei ist das Ziel des Calls nicht im Klartext im Computerprogramm vorhanden. Vielmehr ist die Adresse verschlüsselt. Eine Ausführung ist damit erst bei Vorhandensein einer gültigen Lizenz (Schlüssel) möglich, so dass eine statische Analyse verhindert wird. Ohne eine gültige Lizenz lassen sich somit auch der Ablauf des Computerprogramms und die Aufrufhierarchie nicht vorhersagen und analysieren.

In einer bevorzugten Ausführung des Verfahrens und insbesondere in einer weiteren Ausprägung von Trampolinsprüngen werden Sprünge zu unterschiedlichen Zielen programmgesteuert über das gleiche "Trampolin" durchgeführt. Dies führt dazu, dass von vielen unterschiedlichen Stellen in einem Programm anstelle von unterschiedlichen Zielprozeduren nur das eine Trampolin angesprungen wird. Über einen zusätzlichen Parameter entscheidet das Trampolin nun, welches die eigentliche Zielroutine ist und springt diese an. Als Folge hiervon ist in einer statischen Analyse nicht ersichtlich, welche Routinen von wo aus angesprungen werden. Die statische Analyse liefert daher keine Hierarche von Prozeduren sondern eine flache Struktur, in der jede Prozedur nur das Trampolin referenziert und das Trampolin viele oder alle Zielprozeduren (z.B. Funktionsblock, Modul) referenziert. Hierdurch wird die Ablaufstruktur für eine statische Analyse verschleiert. Bevorzugt wird die Auswahl, welche Zielprozedur oder welches Modul als nächstes angesprungen und aufgerufen wird, in dem geschützten Schlüsselspeicher getroffen. Hierzu ruft die Trampolinfunktion den Schlüsselspeicher auf, übergibt den Eingangsparameter und erhält schließlich einen Auswahlwert zurück, so dass die gewünschte und "richtige" Zielprozedur aufgerufen wird.

Diese Ausgestaltung setzt lediglich eine komplexe Struktur des zu schützenden Computerprogramms voraus, nicht aber eine Verschlüsselung der Trampolinfunktion oder der Module oder Funktionsblöcke. Die geforderte Komplexität ist in der Praxis bei allen Computerprogrammen gegeben, die geschützt werden sollen.

Da ein Angreifer das Programm ohne den Schlüsselspeicher betreiben will, steht ihm die Information, die der Schlüsselspeicher erzeugt, also hier die Auswahl der aufzurufenden Module, nicht zur Verfügung. Er muss sie deshalb durch "Trial and error" herausfinden. Dies wird umso aufwendiger, desto größer die Anzahl der Varianten und Module ist, die eine Trampolinfunktion verwenden.

Eine weitere Möglichkeit gemäß dem Kerckhoffschen Prinzip ist die Überwachung des Zustandsspeichers in dem Schlüsselspeicher. Hierbei wird bevorzugt der Dongle als Zustandsspeicher eingesetzt. Der Dongle oder Schlüsselspeicher erkennt die korrekte Abfolge von Funktionsblöcken und/oder Varianten. Erfolgt ein nicht vorgesehener Aufruf oder eine Anfrage zur Entschlüsselung eines nicht vorgesehenen oder erlaubten Funktionsblocks oder Moduls, so kann das Programm und der Programmablauf gesperrt oder verändert werden und gegebenenfalls ein Alarm ausgegeben werden.

Eine weitere ebenfalls bevorzugte Maßnahme ist die Steuerung und Überwachung der Ablaufreihenfolge und Aufrufhierarchie. Hierbei wird vorausgesetzt, dass der Programmablauf und die Verzweigung zu einzelnen Funktionsblöcken und/oder Varianten in einer vordefinierten Reihenfolge erfolgen. Diese Reihenfolge wird während des Ablaufs überprüft und kontrolliert.

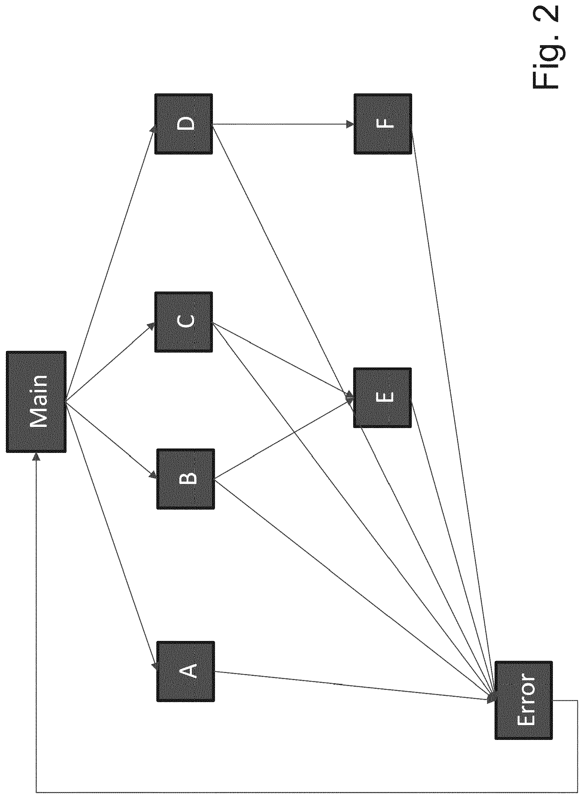

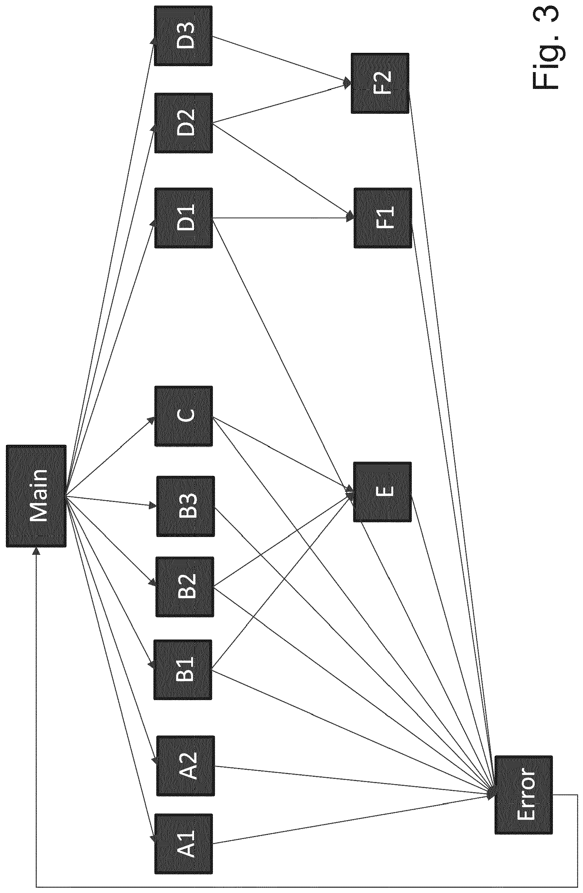

Fig. 2 zeigt den prinzipiellen Ablauf einer Aufrufhierarchie am Beispiel mit mehreren Funktionsblöcken, während Fig. 3 eine Ablaufsteuerung mit Varianten zeigt.

Gemäß Fig. 2 ist zu erkennen, dass die Hauptroutine (Main) mehrere Funktionsblöcke A bis D aufrufen kann. Die Funktionsblöcke B und C rufen einen Funktionsblock E auf. Funktionsblock D ruft den Funktionsblock F auf. Alle Funktionsblöcke können einen Error-Funktionsblock zur Fehlerbehandlung aufrufen.

Durch das erfindungsgemäße automatische Verfahren zum Schutz eines Computerprogramms wird sichergestellt, dass der Programmcode des Computerprogramms immer in einer gültigen vordefinierten Reihenfolge aufgerufen wird. Bevorzugt wird der Ablauf der Reihenfolge dadurch sichergestellt, dass diese Reihenfolge im sicheren Schlüsselspeicher, beispielsweise in einem Dongle, hinterlegt ist. Die Ausführung kann dann nur mit einem angeschlossenen Dongle oder einer vorhandenen Lizenz erfolgen. Da der Schlüsselspeicher oder Dongle selbst aber nicht beobachten kann, welcher Code ausgeführt wird, muss sich der Schlüsselspeicher bevorzugt auf beobachtbare Teile der Ausführung, also des Prozesses, beziehen. Insbesondere sind Verschlüsselungsaufrufe und Anfragen für den Schlüsselspeicher bevorzugt beobachtbar.

Bevorzugt protokolliert der Schlüsselspeicher oder Dongle daher die Entschlüsselung der Funktionsblöcke. Es wird davon ausgegangen, dass der Funktionsblock nach der Entschlüsselung ausgeführt wird. Kehrt der aufgerufene Funktionsblock (z. B. E) später zum aufrufenden Funktionsblock (Aufrufer, z. B. B) zurück, so muss der aufrufende Funktionsblock (z. B. B) den Schlüsselspeicher von der Rückkehr in Kenntnis setzen. Dies kann entweder durch einen erneuten Entschlüsselungsaufruf für den aufzurufenden Funktionsblock (z. B. B) an den Schlüsselspeicher erfolgen oder dadurch, dass der Schlüsselspeicher durch einen separaten Befehl davon in Kenntnis gesetzt wird, dass sich die Aufrufhierarchie erniedrigt hat. Im Beispiel gemäß Funktion 2 könnte die Aufrufabfolge wie folgt aussehen:
Das Hauptprogramm ruft den Funktionsblock A auf. Dieser kehrt zurück zum Hauptprogramm. Anschließend wird Funktionsblock C aufgerufen, der in einem nächsten Schritt Funktionsblock E aufruft. Vom Funktionsblock E erfolgt der Rücksprung zum Funktionsblock C. Daraufhin erfolgt ein Aufruf der Fehlerroutine Error. Ein weiterer Aufruf könnte dann von dem Hauptprogramm an den Funktionsblock D erfolgen, der wiederum den Funktionsblock F aufruft. Von hier erfolgt der Rücksprung zum Funktionsblock D und weiter zum Hauptprogramm.

Wird jedoch unberechtigterweise beispielsweise direkt nach dem Aufruf des Hauptfunktionsblocks der Funktionsblock E aufgerufen, so liegt eine ungültige Aufrufreihenfolge vor. Der Schlüsselspeicher kann dann die weitere Nutzung der Lizenz sperren und blockieren.

In einer bevorzugten Ausführungsform des Verfahrens wird eine statische Programmanalyse verhindert. Üblicherweise ist in dem Code von Computerprogrammen notiert, welche Funktionsblöcke aufgerufen werden. Dies geschieht durch sogenannte Callanweisungen im Programmcode. Direkt im Programmcode ist die Adresse des aufzurufenden Funktionsblocks enthalten. Somit ist eine statische Programmanalyse möglich, wenn festgestellt werden kann, welche Funktionsblöcke von welchen Funktionsblöcken aufgerufen werden können. Eine Manipulationssoftware kann somit die Programmstruktur und die Abhängigkeit der unterschiedlichen Funktionsblöcke untereinander ermitteln. Um dies zu verhindern, wird bevorzugt die Adresse der Aufrufe verschlüsselt. Somit bleibt auch einer Manipulationssoftware unklar, welche Funktionsblöcke von welchen Funktionsblöcken aus aufgerufen werden. Die Aufrufhierarchie lässt sich nur noch dynamisch, also zur Ausführungszeit analysieren.

Fig. 3 zeigt eine Ablaufstruktur mit unterschiedlichen Varianten. Die Funktionsblöcke A, B, D und F sind in diverse Varianten aufgeteilt. Beispielsweise kann der Aufruf der Variante A1 für Werte von 0 bis 10 der Zustandswerte erfolgen, während für Werte von 11 bis 100 die Variante A2 zu wählen ist.

In dem in Fig. 3 gezeigten Beispiel werden die Funktionsblöcke F1 von den Varianten D1 und D2 aufgerufen; der Funktionsblock F2 von den Varianten D2 und D3. Der Funktionsblock E kann von den Varianten B1, B2 und C aufgerufen werden. Bis auf die Varianten D2 und D3 können alle Funktionsblöcke und Varianten den Fehlerbehandlungsfunktionsblock (Error) aufrufen.

Bei der Struktur gemäß Fig. 3 ist klar, dass die Variante B3 des Funktionsblocks B keinen der Funktionsblöcke E bzw. der Varianten F1, F2 aufrufen kann. Erfolgt dennoch ein Aufruf von F1 aus der Variante B2 heraus, so wird ein Fehler erkannt und der Prozess abgebrochen. Es kann in einer bevorzugten Ausführungsform in B2 geprüft werden, ob der Aufruf von F1 zulässig ist.

Alternativ kann in F1 geprüft werden, ob der Aufruf von der Variante B2 auch zulässig ist.

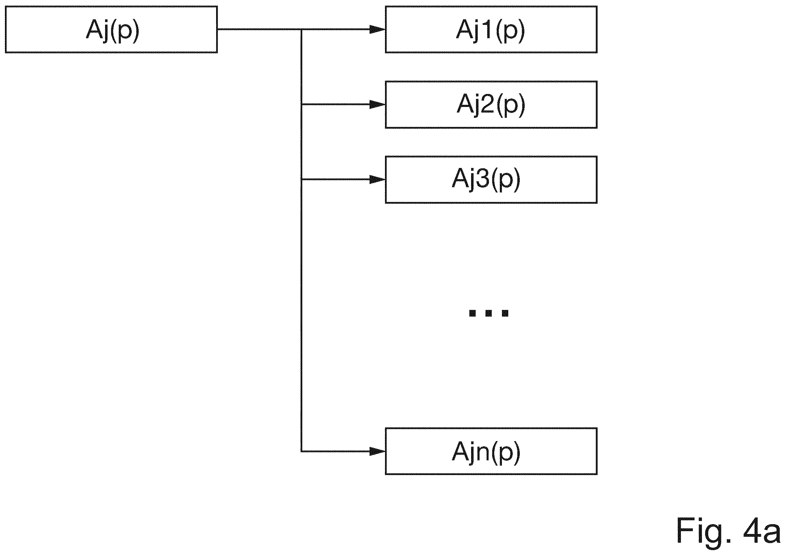

Die Figuren 4a bis 4f zeigen den Verfahrensablauf eines Teils des erfindungsgemäßen Schutzverfahrens für ein Computerprogramm. In dem bevorzugten hier dargestellten Ablauf werden Modulvarianten erzeugt, die zunächst durch Duplizierung entstehen. Das Beispiel betrifft Module, es kann jedoch auf jeden Teil eines Codes eines Computerprogramms angewendet werden, ebenso auf Funktionsblöcke oder andere funktional zusammenhängende Module.

Zunächst wird von einem Modul A ausgegangen, zu dem mehrere identische Modulvarianten durch Duplizierung entstehen. Das hier gezeigte Modul ist in der Aufrufstruktur des Programms in der j-ten Ebene angeordnet. Es wird mit dem Eingangsparameter p gespeist. Die im Beispiel gezeigte Benennung eines solchen Moduls lautet Aj(p).

Durch die mehrfache Duplizierung des Moduls Aj(p) werden n Varianten des Moduls erzeugt, die als Aj1(p), Aj2(p), ... Ajn(p) bezeichnet sind.

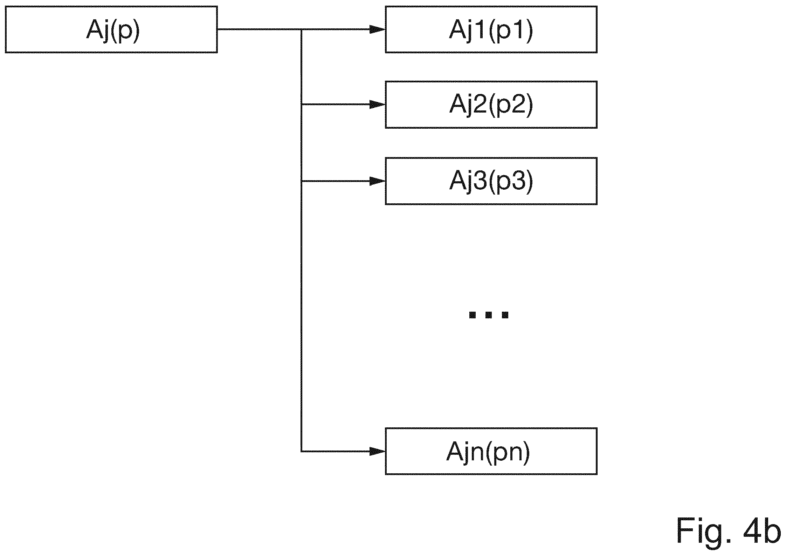

In einem nächsten Schritt werden die duplizierten Modulvarianten Aji(p) modifiziert, so dass die einzelnen Varianten nur noch bestimmte Wertebereiche αi verarbeiten und nur für Parameter innerhalb dieser Wertebereiche gültig sind. In Figur 4b sind diese Modulvarianten als Aj1(p1), Aj2(p2) ... Ajn(pn) bezeichnet.

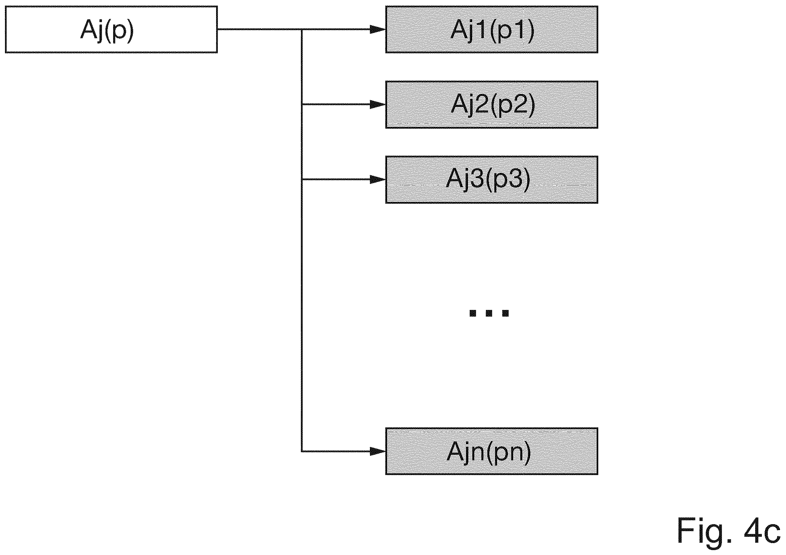

Bevorzugt erfolgt eine Verschlüsselung der modifizierten Modulvarianten, wie sie in Figur 4c zu erkennen sind. Die verschlüsselten Blöcke sind grau hinterlegt dargestellt.

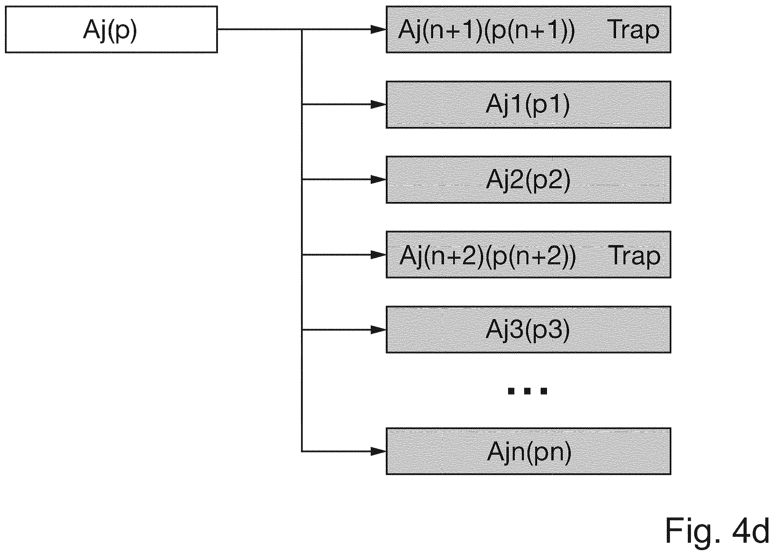

In einer bevorzugten Ausführungsform werden, wie in Figur 4d gezeigt, zwischen den einzelnen Modulvarianten oder Modulblöcken, die verschlüsselt sind, sogenannte Fallen eingefügt. Dies ist Programmcode, der ebenfalls verschlüsselt ist, aber im originären Programmablauf nie aufgerufen und ausgeführt und deshalb auch nie entschlüsselt wird. Diese "Codefallen" haben ebenfalls die Bezeichnung eines Moduls, so dass sich die Gesamtmodulanzahl von n um die Gesamtzahl m der Codefallen erhöht. Hierbei ist zu beachten, dass die Codefallen an beliebiger Stelle zwischen den Modulvarianten angeordnet sein können. Auch kann Ihre Indizierung abgeändert sein.

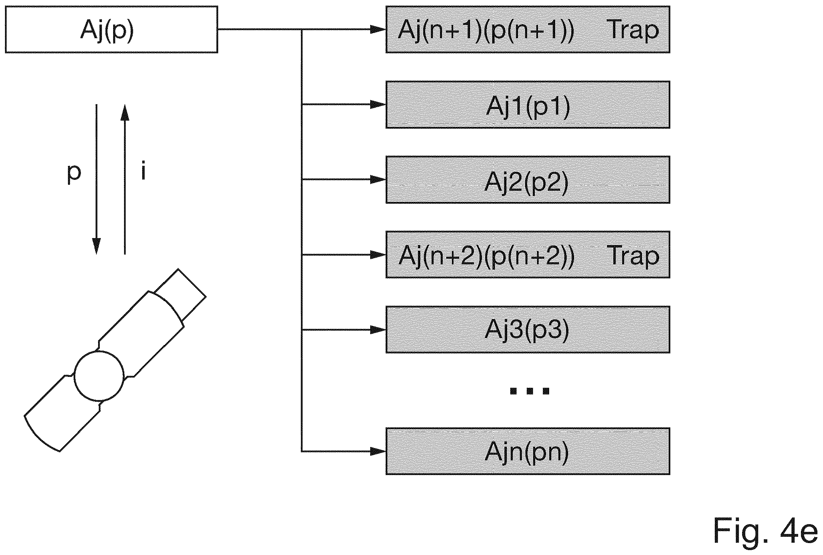

Fig. 4e zeigt die Auswahl der Modulvarianten mittels eines geschützten Schlüsselspeichers, der hier als geschützter und sicherer Dongle ausgeführt ist. Die Auswahl, welche Modulvariante aufgerufen wird, hängt nach der Umleitung des Aufrufs über den Dongle lediglich vom Eingabeparameter pi ab. In dem Dongle wird also die Auswahl der entsprechenden Modulvariante i in Abhängigkeit des Eingabeparameters p aufgeführt. Dabei überprüft der Dongle den Eingangsparameter und bestimmt die Modulauswahl anhand eines Vergleichs des Parameters mit den vorgegebenen Wertebereichen der einzelnen Module. Zurückgegeben an die aufrufende Funktion wird der Index i, der das Modul beschreibt. Der Dongle (Schlüsselspeicher) umfasst hierzu bevorzugt einen Auswahlalgorithmus, der bevorzugt in einem Prozessor des Dongles ausgeführt wird.

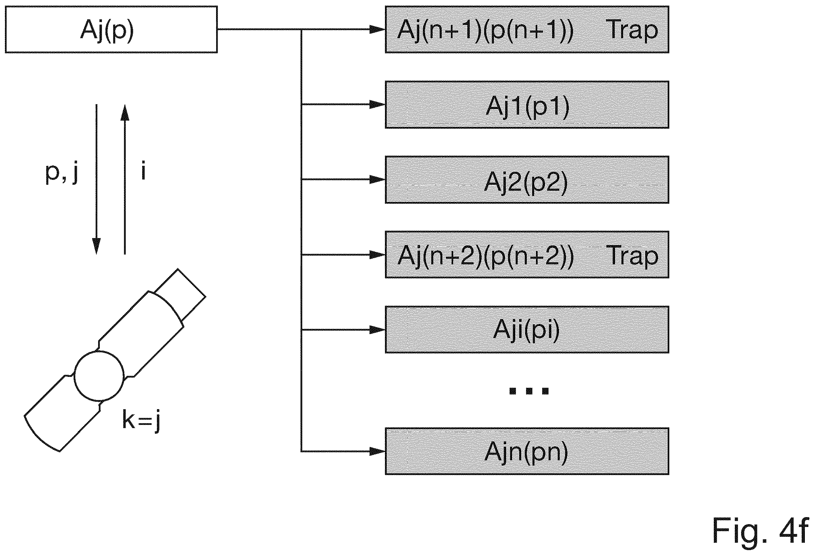

Eine bevorzugte Variante des Verfahrens wird in Fig. 4f beschrieben, in der zusätzlich in dem Schlüsselspeicher ein weiterer Algorithmus (Zustandsalgorithmus) abläuft, so dass der Schlüsselspeicher als Zustandsmaschine arbeitet. Hierbei wird dem Schlüsselspeicher nicht nur der Parameter p übergeben, sondern auch ein Hierarchiewert j. Der Schlüsselspeicher wählt dann, wie oben beschrieben, in Abhängigkeit des Eingangsparameters p die i-te Modulvariante aus. Zusätzlich wird überprüft, ob die Strukturhierarchie des Moduls bzw. der Modulvariante übereinstimmen. Es kann zum einen eine Relation zwischen dem Eingangsparameter und dem Hierarchiewert j hergestellt werden. Es ist aber auch möglich zu überprüfen, von welchem vorherigen Modul oder Codeteil der Aufruf erfolgt und/oder in welcher Strukturhierarchie der aufrufende Codeteil angeordnet ist. Hierdurch kann eine zweite Überprüfung erfolgen, die es einem Angreifer, der auf den Schlüsselspeicher gänzlich verzichten will, weiter erschwert, das geschützte Computerprogramm zu manipulieren und zu verändern.

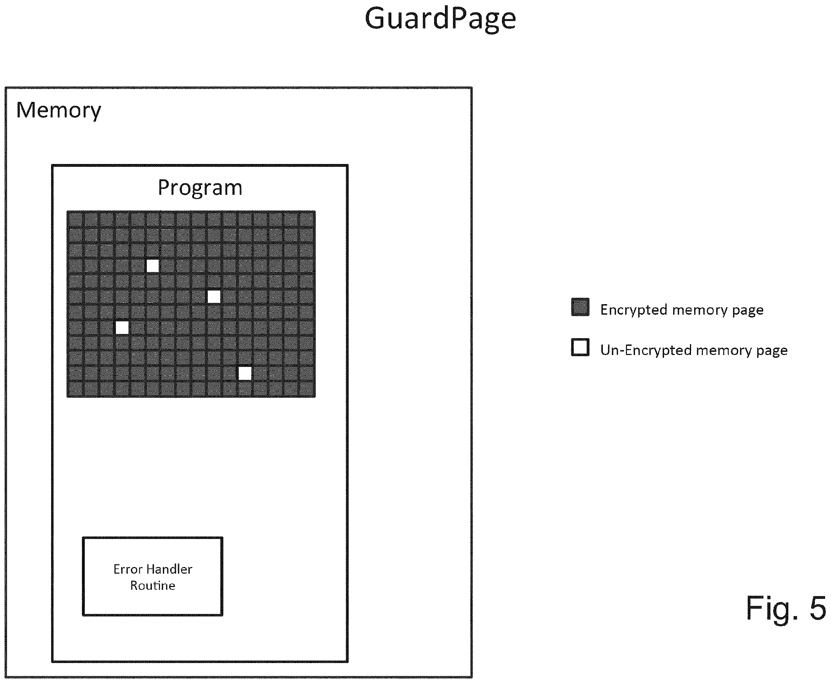

Fig. 5 zeigt eine sogenannte Guard-Page-Anwendung. Dargestellt ist der Hauptspeicher (Memory) des Computersystems, in dem das Computerprogramm (Program) geladen ist. Hierbei ist der Hauptspeicher physikalisch in einzelne Bereiche, sogenannte Seiten oder Kacheln aufgeteilt, die verschlüsselt sein können.

Diese Aufteilung ist bedingt durch die physikalische Konstruktion des Rechners. Eine typische Größe für Seiten ist 4KB (4096 Bytes). Der Rechner kann nur auf Basis dieser Seiten die Schutzeigenschaften des Speichers modifizieren. Dies macht sich das erfindungsgemäße Verfahren zu Nutze.

Eine Seite kann einen der folgenden Zustände haben:
- Kein Zugriff
- Nur lesender Zugriff
- Lesender und schreibender Zugriff
- Lesender Zugriff und Berechtigung zur Codeausführung
- Lesender, schreibender Zugriff und Berechtigung zur Codeausführung

Fordert das durch das erfindungsgemäße Verfahren geschützte Computerprogramm zur Ausführungszeit einen Zugriff an, der durch diese Rechte nicht abgedeckt ist, so wird eine Schutzverletzung ausgelöst. Ein geläufiges Beispiel hierfür ist eine "Null Pointer Exception". Wird eine solche Schutzverletzung ausgelöst, so erhält das Programm die Möglichkeit diese Ausnahme selber zu behandeln, indem eine Behandlungsroutine für Speicherfehler (Error Handling Routine) aufgerufen wird, die das Programm vorher beim Betriebssystem registriert hat.

Im Rahmen der Erfindung wurde erkannt und umgesetzt, dass sich dieser Mechanismus als Schutzmechanismus einsetzen lässt, um Programme davor zu schützen, zur Laufzeit über einen Speicherabzug (Dump) angegriffen zu werden. Dazu werden einzelnen Seiten verschlüsselt und anschließend wird die Zugriffsberechtigung für diese Seiten auf "kein Zugriff gesetzt. Greift das durch das erfindungsgemäße Verfahren geschützte Computerprogramm im Rahmen der Ausführung auf diese Seite zu, so wird eine Schutzverletzung ausgelöst.

Im Rahmen der Behandlungsroutine wird die Seite nun automatisch entschlüsselt und die Zugriffsrechte werden auf die Originalwerte zurückgesetzt. Das Programm kann nun weiterlaufen. Damit nicht im Laufe der Zeit alle Seiten des Programm entschlüsselt vorliegen, kann das Programm zeitgesteuert die Seiten wieder verschlüsseln und den Zugriffsschutz wieder auf "Kein Zugriff setzen.

Das automatische Verfahren zum Schutz eines Computerprogramms stellt somit sicher, dass ein Angreifer oder ein Eindringprogramm, das nun von einem externen Prozess aus den Speicher ausliest, den Speicher nicht im Klartext lesen kann. Verändert das Eindringprogramm den Speicherschutz, so kann es den Speicher zwar lesen, erhält aber nur verschlüsselte Daten.

Bei geschützten Computerprogrammen ist ein Standard-Angriffsweg für Eindringprogramme, das Programm auszuführen und während der Ausführung einen Abzug des Speichers (Dump) anzufertigen. Dieser Dump (Speicherabzug) enthält den Teil des Hauptspeichers, in den das Programm geladen wurde. In einem weiteren Schritt versucht das Eindringprogramm oder der Angreifer aus dem Dump wieder eine ausführbare Datei zu erzeugen.

In einem Dump sind üblicherweise aber nur die Teile des Speichers enthalten, die direkt aus der ausführbaren Datei stammen. Zur Laufzeit vom Programm angeforderter Speicher (z.B. aus dem sog. Heap) ist nicht im Dump enthalten. Werden nun geschützte Programmteile nicht an ihrer normalen Stelle im Hauptspeicher ausgeführt, sondern an einer anderen Stelle (z.B. Heap), so sind diese Programmteile nicht in einem Dump enthalten und stellen den Angreifer daher vor neue Herausforderungen. Diese Erkenntnis nutz das erfindungsgemäße Verfahren aus.

Technisch birgt dieser Ansatz jedoch das Problem, dass bei der Übersetzung des Quellcodes Maschinencode generiert wird, der sich auch auf anderen Code oder Daten im jeweiligen Computerprogramm bezieht. Dies sind beispielsweise Adressen globaler Variablen, Adressen von Prozeduren oder Adressen an denen die Verweise auf Betriebssystemfunktionen abgelegt werden (IAT - Import Address Table). Je nach Maschinenarchitektur sind die Adressen entweder relativ zur jeweiligen Ausführungsadresse oder als absolute Adressen im Prozessraum abgelegt.

Wird der ausführbare Code einer Prozedur eines durch das erfindungsgemäße Verfahren geschützten Computerprogramms an eine andere Adresse verschoben, so sind zwar absolute Adressen weiterhin gültig, aber relative Adressen zu anderen Methoden oder Funktionsblöcken werden damit ungültig.

Das erfindungsgemäße Verfahren umfasst bevorzugt diesen Schutzmechanismus, der sich "Out Of Place Execution" nennt. Dazu wird es bevorzugt das auszuführende Programm analysiert und es werden mindestens die relativen Adressen identifiziert, damit diese zur Laufzeit des geschützten Computerprogramms so korrigiert werden können, dass das Programm lauffähig bleibt.

Das Resultat ist ein Computerprogramm, das einzelne Prozeduren und Funktionsblöcke nicht an der Stelle ausführt, an der sie vom Compiler abgelegt wurden, sondern an wechselnden Adressen im Hauptspeicher des Computersystems. An der Adresse, an der eine Prozedur (Code) vom Compiler abgelegt wurde, ist entweder überhaupt kein Code oder nur verschlüsselter Code. Werden mehrere Prozeduren so behandelt, so können sie zu unterschiedlichen Zeiten an der gleichen Stelle im Hauptspeicher abgelegt werden. Dadurch wird es einem Angreifer oder einer Manipulationssoftware weiter erschwert zu identifizieren, welche Prozedur welchem Code zuzuordnen ist.

Durch die getroffenen Maßnahmen entsprechend dem erfindungsgemäßen Verfahren werden sowohl statische Analysen wie auch dynamische Analysen durch eine Manipulationssoftware oder einen Angreifer verhindert. Eine kompetente Maßnahme ist beispielsweise die Verwendung von Varianten für einzelne Funktionsblöcke oder Module. Im Rahmen der Erfindung wurde erkannt, dass folgende Annahme getroffen werden kann, auf der das Prinzip des erfindungsgemäßen Verfahrens beruht:
Selbst bei Kenntnis von p-1-Varianten eines Funktionsblocks F ist es für einen Angreifer oder eine Manipulationssoftware nicht möglich, eine weitere Variante des Funktionsblocks durch Rekonstruktion zu ermitteln.

Diese Annahme basiert auf der Erkenntnis, dass ein Angreifer oder eine Manipulationssoftware für die Änderung einer Variante eines Funktionsblocks ein detailliertes Wissen über die Funktionsblöcke und die darin verwendeten Algorithmen benötigt. Wenn es einem Angreifer gelingt, die Algorithmen und deren Zusammenspiel in dem Programm so detailliert zu verstehen, so könnte er ein derartiges Computerprogramm auch selbst schreiben und müsste kein bestehendes Programm brechen.

Unter Zuhilfenahme der oben getroffenen Annahme kann mit einem simulationsbasierten Sicherheitsbegriff formal gezeigt werden, dass ein Angreifer, der einen dieser Angriffe ausführen darf, darüber hinaus keine weiteren Informationen erhält und nichts lernt. Somit kann auch ein Angreifer, der eine dynamische Analyse vornimmt, auf einen statischen Angreifer reduziert werden, bis auf die Durchführung von trivialen Angriffen oder von sehr aufwendigen Angriffen, die jedoch nicht effizient und wirtschaftlich darstellbar sind.

Im Rahmen der Erfindung wurde erkannt, dass die Korrektheit des erfindungsgemäßen Schutzverfahrens auf einfache Weise nachgewiesen werden kann. Da das Verfahren den Code des Computerprogramms ändert, beispielsweise durch Variantenbildung, ist es möglich und wichtig zu zeigen, dass diese Änderungen die Funktion des Computerprogramms, welches geschützt werden soll, nicht verändern. Die Korrektheit des Verfahrens kann nachgewiesen werden, indem die Korrektheit der Modifikationen der Varianten nachgewiesen wird. Ist jede elementare Modifikation korrekt, so sind auch beliebige Verkettungen dieser Modifikationen korrekt. Im vorliegenden Fall ist dies unzweifelhaft gegeben.

Das als Blurry-Box-Verfahren bezeichnete Schutzverfahren zum Schutz einer Computersoftware ermöglicht einen Schutz nach dem Kerckhoffschen Prinzip. Gegenüber anderen Softwareschutzverfahren, deren Sicherheit auf der Geheimhaltung des gesamten Verfahrens beruht, wird beim Blurry-Box-Verfahren die Geheimhaltung der Komplexität der Anwendung angesetzt. Das Blurry-Box-Verfahren beruht also auf der Geheimhaltung der im Verfahren benutzten kryptographischen Schlüssel und der komplexen Verflechtung der Programmstruktur. Das Verfahren selbst kann jedoch offengelegt werden, ebenso das geschützte Programm. Hieraus ergeben sich mehrere Vorteile.
- Es ist deutlich einfacher, relativ kurze Schlüssel geheim zu halten als ein komplettes Verfahren und einen Schutzcode.
- Der Schutz durch Geheimhaltung eines Verfahrens ist zweifelhaft, da ein Verfahren durch Reverse-Engineering rekonstruiert werden kann. Diese Gefahr ist hier nicht gegeben.
- Kompromittierte Schlüssel sind einfacher zu ersetzen als kompromittierte Verfahren. Wird ein Verfahren, dessen Sicherheit auf der Geheimhaltung basiert, öffentlich, so bedeutet dies einen globalen Bruch des Verfahrens für alle Lizenzen und Schlüssel. Wird dagegen ein geheimer Schlüssel bekannt, so ist der Bruch lokal auf eine Lizenz begrenzt. Andere mit einem anderen Schlüssel gesicherte Computerprogramme lassen sich damit nicht ausführen.
- Die Sicherheit des Verfahrens kann von unabhängigen Experten öffentlich diskutiert und analysiert werden. Dadurch ist der zum Brechen des Verfahrens benötigte Aufwand quantifizierbar. Im Gegensatz zu bisherigen Verfahren können Softwarehersteller qualifiziert entscheiden, ob sich der Schutz lohnt oder nicht.

Diese Erkenntnis ist Grundlage der vorliegenden Erfindung, die das Kerckhoffsche Prinzip nun erstmals für den Schutz von Computerprogrammen anwendet. Bisher sah die Fachwelt einen großen Vorteil darin, das gesamte Schutzverfahren zu verschlüsseln und geheim zu halten. Eine Offenlegung des Schutzverfahrens stieß auf große Widerstände, da hierin eine große Schwachstelle gesehen wurde. Die Fachwelt glaubte, dass nur das Geheimhalten von Schlüsseln und verschlüsselten Teilen des Verfahrens und der zu schützenden Software einen Nachteil darstellt und so von einer Manipulationssoftware oder einem Eindringprogramm einfacher zu umgehen sei.

## Patentansprüche

1. Verfahren zum Schutz eines Computerprogramms gegen Beeinflussung durch ein Eindringprogramm oder durch eine Manipulationssoftware zur Manipulation von Computerprogrammen auf einem Computersystem mit einem Prozessor, einem Hauptspeicher und einem Speichermedium, **dadurch gekennzeichnet, dass** das Verfahren
eine statische Analyse des geschützten Computerprogramms ohne eine Ausführung des Computerprogramms durch den Prozessor dadurch verhindert, dass Teile des geschützten Computerprogramms verschlüsselt sind, wobei ein zur Entschlüsselung eines verschlüsselten Teils des geschützten Computerprogramms notwendiger Schlüssel in einem geschützten Schlüsselspeicher, der mit dem Computer über eine Schnittstelle kommuniziert, abgelegt ist, und
auf dem Kerckhoffschen Prinzip beruht, so dass das geschützte Computerprogramm frei zugänglich ist und von einem Eindringprogramm oder einer Manipulationssoftware ausgelesen werden kann, wobei Teile des geschützten Computerprogramms mehrfach im Programmcode des geschützten Computerprogramms vorhanden sind,
wobei folgende Schritte ausgeführt werden:
- Aufteilen des zu schützenden Computerprogramms in Module,
- Duplizieren wenigstens eines Moduls (A) zu Modulen (A1, A2),
- Modifizieren der Module (A1, A2),
- Festlegen je eines Wertebereichs (α1, α2) wenigstens eines für die Ausführung des Moduls (A1, A2) erforderlichen Eingangsparameters (a1, a2),
- Verschlüsseln der Module (A1, A2),
- Umlenken eines Modulaufrufs mit wenigstens einem Parameter (a1, a2) an den Schlüsselspeicher, so dass der wenigstens eine Eingangsparameter (a1, a2) an den Schlüsselspeicher übergeben, im Schlüsselspeicher gegen den für das aufgerufene Modul festgelegten Wertebereich (α1, α2) geprüft und entschieden wird, ob ein berechtigter Modulaufruf vorliegt, und
- falls eine Berechtigung ermittelt wird, Rückgabe eines Auswahlparameters (i) zur Auswahl des i-ten Moduls (A1, A2).

2. Verfahren nach dem Anspruch 1, **dadurch gekennzeichnet, dass** ein Modul einen oder mehrere Funktionsblöcke umfasst und wenigstens ein Funktionsblock oder ein Modul durch eine Mehrzahl von Varianten ersetzt wird, wobei bevorzugt die Varianten nach dem Kompilieren des zu schützenden Computerprogramms erzeugt werden.

3. Verfahren nach dem vorherigen Anspruch, **dadurch gekennzeichnet, dass** die Erzeugung von Varianten der Module oder Funktionsblöcke durch Duplizierung, durch Strukturanalyse des Computerprogramms oder anhand von Metainformationen zu dem Computerprogramm erfolgt.

4. Verfahren nach einem der Ansprüche 2 oder 3, **dadurch gekennzeichnet, dass** eine Variante in Abhängigkeit von einem Aufrufparameter (Zustandswert) ausgewählt und ausgeführt wird, wobei mittels des Schlüsselspeichers kontrolliert wird, ob der Zustandswert mit der aufgerufenen Variante korrespondiert.

5. Verfahren nach einem der vorhergehenden Ansprüche 2 bis 4, **dadurch gekennzeichnet, dass** die Varianten modifiziert werden, so dass in der Variante ein Wertebereich für den Zustandswert festgelegt ist und der Zustandswert beim Aufrufen der Variante innerhalb des festgelegten Wertebereichs liegen muss, damit ein gültiger Aufruf erkannt wird und eine Ausführung stattfindet.

6. Verfahren nach einem der Ansprüche 2 bis 5, **dadurch gekennzeichnet, dass** wenigstens eine Variante verschlüsselt ist, wobei der zur Entschlüsselung notwendige Schlüssel in dem sicheren Schlüsselspeicher gespeichert ist und bevorzugt der Prozessor zur Entschlüsselung mit dem sicheren Schlüsselspeicher kommuniziert.

7. Verfahren nach einem der Ansprüche 2 bis 6, **dadurch gekennzeichnet, dass** die Varianten aufgrund der Struktur des Moduls oder Funktionsblocks erzeugt werden und bevorzugt unterschiedliche Entscheidungsbäume innerhalb des Moduls oder Funktionsblocks repräsentieren.

8. Verfahren nach einem der Ansprüche 2 bis 7, **dadurch gekennzeichnet, dass** die Auswahl des Aufrufs einer Variante anhand von vordefinierten Werten erfolgt, die bevorzugt in einer Tabelle abgelegt sind, oder algorithmisch erfolgt, bevorzugt während des Prozessablaufs berechnet wird oder aus den Zustandswerten des Prozesses ermittelt wird, oder in dem Schlüsselspeicher ermittelt wird.

9. Verfahren nach einem der vorhergehenden Ansprüche, **dadurch gekennzeichnet, dass** der Zustandswert ein Wert bezüglich des Prozesszustandes ist und dass überprüft wird, ob der Zustandswert in einem gültigen, vordefinierten, Gültigkeitsbereich liegt.

10. Verfahren nach einem der vorhergehenden Ansprüche, **dadurch gekennzeichnet, dass** das Computerprogramm Module, Funktionsblöcke und/oder Varianten aufweist, die von dem Prozess nie ausgeführt werden und deren Aufruf oder deren Ausführung zum Prozessabbruch, zum Sperren des Schlüsselspeichers und/oder zum Löschen des Schlüsselspeichers führt.

11. Verfahren nach einem der vorhergehenden Ansprüche, **dadurch gekennzeichnet, dass** der Aufruf eines Moduls oder einer Variante aufgrund eines Zustandswerts erfolgt, der die Aufrufhierarchie oder die Aufrufreihenfolge repräsentiert, wobei bevorzugt der Zustandswert Auskunft gibt, welches Modul oder welche Variante als nächstes aufgerufen wird oder ebenfalls bevorzugt, welches Modul oder welche Variante als letzte aufgerufen wurde.

12. Verfahren nach einem der vorherigen Ansprüche, **dadurch gekennzeichnet, dass** der sichere Schlüsselspeicher das Speichermedium des Computers oder ein geschützter Bereich des Speichermediums des Computers oder ein Dongle ist, der über eine Schnittstelle mit dem Computer kommuniziert.

13. Verfahren nach einem der vorherigen Ansprüche, **dadurch gekennzeichnet, dass** der weitere Verfahrensschritt ausgeführt wird:
- Verarbeiten des Zustandswerts in dem sicheren Schlüsselspeicher oder Ablegen an einem Speicherort des Computers.

14. Verfahren nach einem der vorherigen Ansprüche, **dadurch gekennzeichnet, dass** eine Manipulation durch eine Manipulationssoftware oder ein Eindringen durch ein Eindringprogramm erkannt wird und eine Reaktion derart ausgelöst wird, dass der Schlüsselspeicher verändert wird, beispielsweise gesperrt oder gelöscht wird, oder dass eine Alarmierung ausgelöst wird.

15. Computersystem mit einem Prozessor, einem Speichermedium und wenigstens einem Hauptspeicher und bevorzugt mit einer Schnittstelle zum Anschluss eines Schlüsselspeichers oder Dongles, wobei auf dem Computersystem Computerprogramme gespeichert und ausgeführt werden können und wobei das Computersystem zum Ausführen eines Verfahrens zum Schutz einer Computersoftware gegen Beeinflussung durch ein Eindringprogramm oder eine Software zur Manipulation von geschützten Computerprogrammen geeignet und ausgebildet ist, nach einem Verfahren gemäß den vorhergehenden Ansprüchen.

## Claims

1. Method for protecting a computer program from being influenced by an invasive program or by manipulation software for manipulating computer programs on a computer system comprising a processor, a main memory and a storage medium,
**characterized in that**
the method prevents a static analysis of the protected computer program without execution of the computer program by the processor due to the fact that parts of the protected computer program are encrypted, wherein a key required for decrypting an encrypted part of the protected computer program is stored in a protected key storage unit that communicates with the computer via an interface, and
the method is based on the Kerckhoff principle so that the protected computer program is freely accessible and can be read out by an invasive program or manipulation software, wherein parts of the protected computer program are provided multiple times in the program code of the protected computer program, wherein the following steps are carried out:
- dividing the computer program to be protected into modules,
- duplicating at least one module (A) into modules (A1, A2),
- modifying the modules (A1, A2),
- defining a respective value range (α1, α2) for at least one input parameter (a1, a2) required for the execution of the module (A1, A2),
- encrypting the modules (A1, A2),
- redirecting a module call with at least one parameter (a1, a2) to the key storage unit so that the at least one input parameter (a1, a2) is handed over to the key storage unit and checked against the value range (α1, α2) defined for the invoked module in the key storage unit, and it is decided in the key storage unit if the module call is authorized, and
- a selection parameter (i) for selecting the i^{th} module (A1, A2) is returned if such authorization is verified.

2. Method according to claim 1, **characterized in that** a module comprises one or more function blocks and at least one function block or one module is replaced with a plurality of variants, wherein the variants are preferably generated after the computer program to be protected has been compiled.

3. Method according to the preceding claim, **characterized in that** variants of the modules or function blocks are generated by means of duplication, by means of a structure analysis of the computer program or based on meta information on the computer program.

4. Method according to any one of claims 2 or 3, **characterized in that** a variant is selected and executed subject to a call parameter (state value), wherein the key storage unit checks if the state value corresponds to the invoked variant.

5. Method according to any one of preceding claims 2 to 4, **characterized in that** the variants are modified so that a value range for the state value is defined in the variant and the state value must lie within the defined value range when the variant is invoked in order for a valid call to be detected and an execution to be performed.

6. Method according to any one of claims 2 to 5, **characterized in that** at least one variant is encrypted, wherein the key required for decryption is stored in the secure key storage unit and the processor preferably communicates with the secure key storage unit in order to carry out the decryption.

7. Method according to any one of claims 2 to 6, **characterized in that** the variants are generated based on the structure of the module or function block and preferably represent different decision trees within the module or function block.

8. Method according to any one of claims 2 to 7, **characterized in that** a variant to be invoked is selected based on predefined values that are preferably stored in a table or is determined algorithmically, preferably calculated while the process is executed or determined from the state values of the process or determined in the key storage unit.

9. Method according to any one of the preceding claims, **characterized in that** the state value is a value that refers to the process state and **in that** it is checked if the state value lies within a valid, predefined validity range.

10. Method according to any one of the preceding claims, **characterized in that** the computer program comprises modules, function blocks and/or variants that are never executed by the process and, if invoked or executed, lead to the process termination, locking of the key storage unit and/or deletion of the key storage unit.

11. Method according to any one of the preceding claims, **characterized in that** the call of a module or a variant takes place based on a state value that represents the call hierarchy or the call sequence, wherein preferably the state value provides information on the module or variant to be invoked next or, also preferably, provides information on the module or variant last invoked.

12. Method according to any one of the preceding claims, **characterized in that** the secure key storage unit is the storage medium of the computer or a protected area of the storage medium of the computer or a dongle that communicates with the computer via an interface.

13. Method according to any one of the preceding claims, **characterized in that** the following additional method step is carried out:
- processing the state value in the secure key storage unit or storing the state value in a storage location of the computer.

14. Method according to any one of the preceding claims, **characterized in that** a manipulation by means of manipulation software or an intrusion by means of an invasive program is detected and causes such a reaction that the key storage unit is changed, for example locked or deleted, or an alarm is triggered.

15. Computer system with a processor, a storage medium and at least one main memory and preferably with an interface for connecting a key storage unit or dongle, wherein computer programs may be stored and executed on the computer system, and wherein the computer system is configured and designed for executing a method for protecting computer software against being influenced by an invasive program or software for manipulating protected computer programs, in the form of a method according to the preceding claims.

## Revendications

1. Procédé de protection d'un programme informatique contre toute interférence par un programme d'intrusion ou un logiciel de manipulation pour la manipulation de programmes informatiques sur un système informatique comprenant un processeur, une mémoire principale et un support de mémoire, **caractérisé en ce que** le procédé
empêche une analyse statique du programme informatique protégé sans exécution du programme informatique par le processeur par cryptage de parties du programme informatique protégé, une clé nécessaire pour décrypter une partie cryptée du programme informatique protégé étant déposée dans une mémoire de clés protégée qui communique avec l'ordinateur via une interface et
repose sur le principe de Kerckhoff de façon telle que le programme informatique protégé est librement accessible et peut être lu par un programme d'intrusion ou un logiciel de manipulation, des parties du programme informatique protégé étant présentes plusieurs fois dans le code de programme du programme informatique protégé,
les étapes suivantes étant exécutées :
- répartition du programme informatique à protéger en modules ;
- duplication d'au moins un module (A) pour obtenir des modules (A1, A2) ;
- modification des modules (A1, A2) ;
- détermination respectivement d'une plage de valeurs (α1, α2) d'au moins un paramètre d'entrée (a1, a2) requis pour l'exécution du module (A1, A2) ;
- cryptage des modules (A1, A2),
- renvoi d'un appel de module avec au moins un paramètre (a1, a2) à la mémoire de clés, de sorte que l'au moins un paramètre d'entrée (a1, a2) est transféré à la mémoire de clés, est contrôlé dans la mémoire de clés par rapport à la plage de valeurs (α1, α2) fixée pour le module appelé, et il est décidé s'il y a un appel de module autorisé et
- si une autorisation est détectée, restitution d'un paramètre de sélection (i) pour la sélection du i^{ème} module (A1, A2).

2. Procédé selon la revendication 1, **caractérisé en ce qu'**un module comprend un ou plusieurs blocs fonctionnels et au moins un bloc fonctionnel ou un module est remplacé par une pluralité de variantes, les variantes étant générées de préférence après la compilation du programme informatique à protéger.

3. Procédé selon la revendication précédente, **caractérisé en ce que** la génération de variantes des modules ou blocs fonctionnels se fait par duplication, par analyse structurelle du programme informatique ou à l'aide de métainformations sur le programme informatique.

4. Procédé selon l'une des revendications 2 ou 3, **caractérisé en ce qu'**une variante est sélectionnée et exécutée en onction d'un paramètre d'appel (valeur d'état), étant entendu qu'il est contrôlé, au moyen de la mémoire de clés, si la valeur d'état correspond à la variante appelée.

5. Procédé selon l'une des revendications précédentes 2 à 4, **caractérisé en ce que** les variantes sont modifiées de telle sorte qu'est fixée, dans la variante, une plage de valeurs pour la valeur d'état et que la valeur d'état doit, à l'appel de la variante, se trouver dans la plage de valeurs fixée pour qu'un appel valable soit reconnu et qu'une exécution ait lieu.

6. Procédé selon l'une des revendications 2 à 5, **caractérisé en ce qu'**au moins une variante est cryptée, la clé nécessaire pour le décryptage étant sauvegardée dans la mémoire de clés sécurisée et le processeur, pour le décryptage, communiquant préférentiellement avec la mémoire de clés sécurisée.

7. Procédé selon l'une des revendications 2 à 6, **caractérisé en ce que** les variantes sont générées sur la base de la structure du module ou du bloc fonctionnel et représentent préférentiellement différents arbres décisionnels dans le module ou bloc fonctionnel.

8. Procédé selon l'une des revendications 2 à 7, **caractérisé en ce que** la sélection de l'appel d'une variante se fait à l'aide de valeurs prédéfinies qui sont déposées préférentiellement dans une table, ou algorithmiquement, est calculée de préférence pendant le déroulement du processus ou est déterminée à partir des valeurs d'état du processus ou est déterminée dans la mémoire de clés.

9. Procédé selon l'une des revendications précédentes, **caractérisé en ce que** la valeur d'état est une valeur relative à l'état du processus et **en ce qu'**il est vérifié si la valeur d'état se trouve dans une plage de validité valable prédéfinie.

10. Procédé selon l'une des revendications précédentes, **caractérisé en ce que** le programme informatique comporte des modules, blocs fonctionnels et/ou variantes qui ne sont jamais exécutés par le processus et dont l'appel ou l'exécution entraîne l'interruption du processus, le blocage de la mémoire de clés et/ou l'effacement de la mémoire de clés.

11. Procédé selon l'une des revendications précédentes, **caractérisé en ce que** l'appel d'un module ou d'une variante se fait sur la base d'une valeur d'état qui représente la hiérarchie d'appel ou l'ordre des appels, la valeur d'état indiquant préférentiellement quel module ou quelle variante sont ensuite appelés ou, également préférentiellement, quel module ou quelle variante sont appelés en dernier lieu.

12. Procédé selon l'une des revendications précédentes, **caractérisé en ce que** la mémoire de clés sécurisée est le support de mémoire de l'ordinateur ou une zone protégée du support de mémoire de l'ordinateur ou un dongle qui communique avec l'ordinateur via une interface.

13. Procédé selon l'une des revendications précédentes, **caractérisé en ce qu'**est exécutée l'autre étape du procédé :
- traitement de la valeur d'état dans la mémoire de clés sécurisée ou dépôt à un emplacement de mémoire de l'ordinateur.

14. Procédé selon l'une des revendications précédentes, **caractérisé en ce qu'**est reconnue une manipulation par un logiciel de manipulation ou une intrusion par un programme d'intrusion et **en ce qu'**une réaction est déclenchée de telle sorte que la mémoire de clés est modifiée, par exemple, bloquée ou effacée, ou qu'une alarme est déclenchée.

15. Système informatique comportant un processeur, un support de mémoire et au moins une mémoire principale, et préférentiellement une interface pour la connexion d'une mémoire de clés ou dongle, des programmes informatiques pouvant être stockés et exécutés sur le système informatique et le système informatique étant approprié et conçu pour exécuter un procédé de protection d'un logiciel informatique contre toute interférence par un programme d'intrusion ou un logiciel de manipulation de programmes informatiques protégés, selon un procédé selon les revendications précédentes.
